# EUROPEAN PATENT APPLICATION

(11) **EP 4 135 284 A1**
(43) Date of publication of application: **15.02.2023**
(21) Application number: 20933533.0
(22) Date of filing: 29.04.2020
(51) Int. Cl.: H04L 29/08

(54) **DATA TRANSMISSION METHOD AND COMMUNICATION APPARATUS**

(71) Applicant: Huawei Technologies Co., Ltd., Shenzhen, Guangdong 518129 (CN)
(72) Inventor: GAO, Lei, Shenzhen, Guangdong 518129 (CN); MA, Sha, Shenzhen, Guangdong 518129 (CN)
(74) Representative: Huawei European IPR
(86) International application number: PCT/CN2020/087848
(87) International publication number: WO 2021/217510

(57) **Abstract**

Embodiments of this application provide a data transmission method and a communications apparatus that may be applied to the field of intelligent vehicles or intelligent driving, and in particular, relate to a cockpit domain service. The method includes: A slave node transmits first data in a target service to a master node on a first time domain resource in a first time domain resource unit by using a first frequency domain resource. Then, the slave node transmits second data in the target service to the master node on a third time domain resource in a second time domain resource unit by using a second frequency domain resource. The first time domain resource unit is adjacent to the second time domain resource unit in time domain. The first time domain resource unit sequentially includes, in time domain, the first time domain resource, a first guard period, a second time domain resource, and a second guard period. The second time domain resource unit sequentially includes, in time domain, the third time domain resource, a third guard period, a fourth time domain resource, and a fourth guard period. This can ensure that the communications apparatus has sufficient time to perform frequency domain resource switching.

## Description

### TECHNICAL FIELD

This application relates to the communications field, in particular, to the short-range communications field, and specifically, to a data transmission method and a communications apparatus.

### BACKGROUND

Diversified vehicle-mounted applications lead to increasingly more in-vehicle communications nodes and more types of in-vehicle communications nodes, and impose a higher requirement on a vehicle-mounted communication capability. Usually, there are a plurality of communications domains in a vehicle. One communications domain includes one master node and at least one slave node. The master node schedules a resource for a communication link between the master node and the slave node to implement communication between the master node and the slave node.

To facilitate coordination of interference between a plurality of communications domains in a vehicle, each communications domain needs to support frequency domain resource switching, and a total quantity of frequency domain resources occupied in the communications domain remains unchanged before and after the frequency domain resource switching. For a service such as a semi-persistent scheduling (Semi-Persistent Scheduling, SPS) service that has a strict transmission quality requirement, it needs to be ensured that transmission quality of the service is not affected in a frequency domain resource switching process. However, the frequency domain resource switching process requires time. If there is no sufficient time to complete the frequency domain resource switching, transmission quality of the service is affected.

### SUMMARY

Embodiments of this application provide a data transmission method and a communications apparatus, so that it can be ensured that the communications apparatus has sufficient time to perform frequency domain resource switching, and normal data transmission between the communications apparatus and another communications apparatus is not affected.

According to a first aspect, a data transmission method is provided. The data transmission is performed between a slave node and a master node. The master node manages the slave node, has a function of allocating resources, and is responsible for allocating resources to the slave node. The slave node is scheduled by the master node to communicate with the master node by using the resources allocated by the master node. The method is performed by the slave node, or the method may be performed by a chip or an integrated circuit configured on the slave node. This is not limited in this application.

The method includes: The slave node transmits first data in a target service to the master node on a first time domain resource in a first time domain resource unit by using a first frequency domain resource. Then, the slave node transmits second data in the target service to the master node on a third time domain resource in a second time domain resource unit by using a second frequency domain resource. The first time domain resource unit is adjacent to the second time domain resource unit in time domain. The first time domain resource unit sequentially includes, in time domain, the first time domain resource, a first guard period (guard period, GP), a second time domain resource, and a second guard period. The second time domain resource unit sequentially includes, in time domain, the third time domain resource, a third guard period, a fourth time domain resource, and a fourth guard period.

It should be noted that the first data and the second data are continuous data or associated data in the target service. For example, if data in the target service is not completely transmitted in a current time domain resource unit, remaining data continues to be transmitted in a subsequent time domain resource unit. For another example, the data in the target service is periodically transmitted, the first data in a first periodicity is transmitted in the current time domain resource unit, and the second data in a second periodicity is transmitted in the subsequent time domain resource. Content of the first data and the second data is not specifically limited in this application.

It may be understood that the slave node transmits the first data to the master node by using the first frequency domain resource, and transmits the second data to the master node by using the second frequency domain resource. In other words, after transmission of the first data ends and before transmission of the second data starts, the slave node completes frequency domain resource switching, that is, switches from the first frequency domain resource to the second frequency domain resource. In time domain, the first time domain resource and the third time domain resource are separated by the first GP, the second time domain resource, and the second GP. In other words, available duration in which the slave node switches from the first frequency domain resource to the second frequency domain resource includes the first GP, the second time domain resource, and the second GP. This ensures that the slave node has sufficient time to perform frequency domain resource switching, and normal data transmission between the slave node and the master node is not affected.

In some possible implementations, the switching from the first frequency domain resource to the second frequency domain resource may be scheduling-based, preconfigured, or predefined.

For example, the master node sends signaling to the slave node, where the signaling is used to indicate that transmission of the data of the target service is switched from the first frequency domain resource to the second frequency domain resource. Optionally, the signaling may be used to further indicate a switching moment of the frequency domain resources. Specifically, the signaling may be higher layer signaling or physical layer signaling, and the higher layer signaling or the physical layer signaling may further include unicast signaling, broadcast information, multicast signaling, and the like.

For another example, a pre-configuration file is written into the master node or the slave node in a production or maintenance process. The pre-configuration file is used to indicate that transmission of the target service may be switched between a plurality of frequency domain resources and switching moments of the frequency domain resources.

For still another example, the frequency domain resource switching is predefined in a standard or a protocol. Optionally, a plurality of frequency domain resources are predefined in the standard or the protocol, and transmission of the target service performed by the slave node may be switched among the plurality of frequency domain resources.

It should be noted that different types of services transmitted between the slave node and the master node have different delay requirements. One type of service has a high delay requirement and a relatively stable data volume and/or periodicity. This application is mainly used to ensure normal transmission of this type of service having the high delay requirement in a frequency domain resource switching process.

Optionally, in some possible implementations, the first time domain resource and the third time domain resource are used to map information (uplink information) sent by the slave node, and the second time domain resource and the fourth time domain resource are used to map information (downlink information) received by the slave node. Alternatively, the first time domain resource and the third time domain resource are used to map information (downlink information) received by the slave node, and the second time domain resource and the fourth time domain resource are used to map information (uplink information) sent by the slave node. In this implementation, structures of the first time domain resource unit and the second time domain resource unit can be flexibly configured, thereby improving scalability of this solution.

Optionally, total lengths of the first time domain resource unit and the second time domain resource unit are the same in time domain. Lengths of any two of the first time domain resource, the second time domain resource, the third time domain resource, and the fourth time domain resource may be the same or different; and/or lengths of any two guard periods of the first guard period, the second guard period, the third guard period, and the fourth guard period may be the same or different. On a premise that total lengths of all time domain resource units are the same, lengths of components in each time domain resource unit are not limited in this application, and may be flexibly configured or defined during actual application, thereby improving scalability of this application.

Optionally, in some possible implementations, after the slave node completes frequency domain resource switching, the slave node first transmits a target signal to the master node on a first time domain sub-resource in the third time domain resource by using the second frequency domain resource. Then, the slave node transmits the second data in the target service to the master node on a second time domain sub-resource in the third time domain resource unit by using the second frequency domain resource. The target signal is used for channel estimation. The first time domain sub-resource is located before the second time domain sub-resource in time domain. In other words, after the slave node completes frequency domain resource switching, the slave node first sends the target signal to the master node, and then sends the second data to the master node. Alternatively, the slave node first receives the target signal sent by the master node, and then receives the second data sent by the master node. After the slave node (the master node) determines the channel based on the received target signal, the slave node (the master node) transmits the second data, thereby reducing a transmission delay of the data in the target service.

Optionally, in some possible implementations, the first time domain resource may include two time domain sub-resources (for example, a third time domain sub-resource and a fourth time domain sub-resource) in time domain. The fourth time domain sub-resource adjacent to the first GP is not used to map data (including service data and control signaling) or a signal, and the third time domain sub-resource is used to map the first data; and/or the third time domain resource may include two time domain sub-resources (for example, a fifth time domain sub-resource and a sixth time domain sub-resource) in time domain, where the fifth time domain sub-resource adjacent to the second GP is not used to map data (including service data and control signaling) or a signal, and the sixth time domain sub-resource is used to map the second data. It can be learned from the foregoing description that, in addition to the first GP, the second time domain resource, and the second GP, the available duration in which the slave node switches from the first frequency domain resource to the second frequency domain resource may further include some time domain sub-resources in the first time domain resource that are adjacent to the first GP and/or some time domain sub-resources in the third time domain resource that are adjacent to the second GP. This further ensures sufficient time to perform frequency domain resource switching.

Optionally, in some possible implementations, the first time domain resource unit and the second time domain resource unit have a same time length. Further, the time length may be predefined or configured. For example, the time length may be 1/48 kHz (kilohertz), approximately equal to 20.833 microseconds. In this implementation, for a service of which a sampling periodicity T=48 kHz, the length of the time domain resource unit is set to 1/T, so that a service transmission delay can be reduced.

Optionally, a type of the first frequency domain resource and the second frequency domain resource each includes a carrier, a subcarrier, or a subchannel, and/or a type of the first time domain resource unit and the second time domain resource unit each includes a subframe, a frame, or a slot.

According to a second aspect, a data transmission method is provided. The data transmission is performed between a slave node and a master node. The master node manages the slave node, has a function of allocating resources, and is responsible for allocating resources to the slave node. The slave node is scheduled by the master node to communicate with the master node by using the resources allocated by the master node. The method is performed by the slave node, or the method may be performed by a chip or an integrated circuit configured on the slave node. This is not limited in this application.

The method includes: The slave node transmits first data in a target service to the master node on a second time domain resource in a first time domain resource unit by using a first frequency domain resource. Then, the slave node transmits second data in the target service to the master node on a fourth time domain resource in a second time domain resource unit by using a second frequency domain resource. The first time domain resource unit is adjacent to the second time domain resource unit in time domain. The first time domain resource unit sequentially includes, in time domain, a first time domain resource, a first guard period, the second time domain resource, and a second guard period. The second time domain resource unit sequentially includes, in time domain, a third time domain resource, a third guard period, the fourth time domain resource, and a fourth guard period.

It may be understood that the slave node transmits the first data to the master node by using the first frequency domain resource, and transmits the second data to the master node by using the second frequency domain resource. In other words, after transmission of the first data ends and before transmission of the second data starts, the slave node completes frequency domain resource switching, that is, switches from the first frequency domain resource to the second frequency domain resource. In time domain, the second time domain resource and the fourth time domain resource are separated by the second GP, the third time domain resource, and the third GP. In other words, available duration in which the slave node switches from the first frequency domain resource to the second frequency domain resource includes the second GP, the third time domain resource, and the third GP. This ensures that the slave node has sufficient time to perform frequency domain resource switching, and normal data transmission between the slave node and the master node is not affected.

Optionally, in some possible implementations, the first time domain resource and the third time domain resource are used to map information (uplink information) sent by the slave node, and the second time domain resource and the fourth time domain resource are used to map information (downlink information) received by the slave node. Alternatively, the first time domain resource and the third time domain resource are used to map information (downlink information) received by the slave node, and the second time domain resource and the fourth time domain resource are used to map information (uplink information) sent by the slave node. In this implementation, structures of the first time domain resource unit and the second time domain resource unit can be flexibly configured, thereby improving scalability of this solution.

Optionally, in some possible implementations, after the slave node completes frequency domain resource switching, the slave node first transmits a target signal to the master node on a first time domain sub-resource in the fourth time domain resource by using the second frequency domain resource. Then, the slave node transmits the second data in the target service to the master node on a second time domain sub-resource in the fourth time domain resource by using the second frequency domain resource. The target signal is used for channel estimation. The first time domain sub-resource is located before the second time domain sub-resource in time domain. In other words, after the slave node completes frequency domain resource switching, the slave node first sends the target signal to the master node, and then sends the second data to the master node. Alternatively, the slave node first receives the target signal sent by the master node, and then receives the second data sent by the master node. After the slave node (the master node) determines the channel based on the received target signal, the slave node (the master node) transmits the second data, thereby reducing a transmission delay of the data in the target service.

Optionally, in some possible implementations, the second time domain resource may include two time domain sub-resources (for example, a third time domain sub-resource and a fourth time domain sub-resource) in time domain, where the fourth time domain sub-resource adjacent to the second GP is not used to map data (including service data and control signaling) or a signal, and the third time domain sub-resource is used to map the first data; and/or the fourth time domain resource may include two time domain sub-resources (for example, a fifth time domain sub-resource and a sixth time domain sub-resource) in time domain, where the fifth time domain sub-resource adjacent to the third GP is not used to map data (including service data and control signaling) or a signal, and the sixth time domain sub-resource is used to map the second data. It can be learned from the foregoing description that, in addition to the second GP, the third time domain resource, and the third GP, the available duration in which the slave node switches from the first frequency domain resource to the second frequency domain resource may further include some time domain sub-resources in the second time domain resource that are adjacent to the second GP and/or some time domain sub-resources in the fourth time domain resource that are adjacent to the third GP. This further ensures sufficient time to perform frequency domain resource switching.

Optionally, in some possible implementations, the first time domain resource unit and the second time domain resource unit have a same time length. Further, the time length may be predefined or configured. For example, the time length may be 1/48 kHz, approximately equal to 20.833 microseconds.

Optionally, a type of the first frequency domain resource and the second frequency domain resource each includes a carrier, a subcarrier, or a subchannel, and/or a type of the first time domain resource unit and the second time domain resource unit each includes a subframe, a frame, or a slot.

According to a third aspect, a data transmission method is provided. The data transmission is performed between a slave node and a master node. The master node manages the slave node, has a function of allocating resources, and is responsible for allocating resources to the slave node. The slave node is scheduled by the master node to communicate with the master node by using the resources allocated by the master node. The method is performed by the master node, or the method may be performed by a chip or an integrated circuit configured on the master node. This is not limited in this application.

The method includes: The master node transmits data of a first service to a first slave node on a first time domain resource in a first time domain resource unit by using a first frequency domain resource. Then, the master node transmits data of a second service to a second slave node on a second time domain resource in the first time domain resource unit by using a second frequency domain resource. The first time domain resource unit sequentially includes, in time domain, the first time domain resource, a first guard period, the second time domain resource, and a second guard period.

It may be understood that data transmission between the first slave node and the master node and data transmission between the second slave node and the master node include two cases. First, if the master node sends the data of the first service to the first slave node, the master node receives the data of the second service that is sent by the second slave node. Second, if the master node receives the data of the first service that is sent by the first slave node, the master node sends the data of the second service to the second slave node.

In time domain, the first time domain resource and the second time domain resource are separated by the first GP. In other words, available duration in which the master node switches from the first frequency domain resource to the second frequency domain resource includes the first GP. The master node needs to perform both uplink transmission and downlink transmission in the first time domain resource unit. Therefore, the master node may perform frequency domain resource switching in the first GP between the first time domain resource and the second time domain resource, and complete switching from receiving to sending or from sending to receiving. In addition, a component capability of the master node is stronger than that of the slave node, and can support frequency domain resource switching to be completed in a relatively short time. Therefore, in this embodiment, it can be ensured that the master node has sufficient time to perform frequency domain resource switching, and normal transmission between the master node and the first slave node and normal transmission between the master node and the second slave node are not affected.

Optionally, in some possible implementations, the first time domain resource is used to map information (downlink information) sent by the master node, and the second time domain resource is used to map information (uplink information) received by the master node. Alternatively, the first time domain resource is used to map information (uplink information) received by the master node, and the second time domain resource is used to map information (downlink information) sent by the master node. In this implementation, the structure of the first time domain resource unit can be flexibly configured, thereby improving scalability of this solution.

Optionally, in some possible implementations, after the master node completes frequency domain resource switching, the master node first transmits a target signal to the second slave node on a first time domain sub-resource in the second time domain resource by using the second frequency domain resource. Then, the master node transmits second data in a target service to the second slave node on a second time domain sub-resource in the second time domain resource by using the second frequency domain resource. The target signal is used for channel estimation. The first time domain sub-resource is located before the second time domain sub-resource in time domain. In other words, the master node first sends, on a part of the second time domain resource, the target signal to the second slave node, and then sends, on some other part of the second time domain resource, the data of the second service to the second slave node. Alternatively, the master node first receives, on a part of the second time domain resource, the target signal sent by the second slave node, and then receives, on some other part of the second time domain resource, the data of the second service that is sent by the second slave node. After the second slave node (the master node) determines a channel based on the received target signal, the second slave node (the master node) transmits the data of the second service, thereby reducing a transmission delay of the data of the second service.

Optionally, in some possible implementations, the first time domain resource may include two time domain sub-resources (for example, a third time domain sub-resource and a fourth time domain sub-resource) in time domain. The fourth time domain sub-resource adjacent to the first GP is not used to map data (including service data and control signaling) or a signal, and the third time domain sub-resource is used to map the data of the first service; and/or the second time domain resource may include two time domain sub-resources (for example, a fifth time domain sub-resource and a sixth time domain sub-resource) in time domain, where the fifth time domain sub-resource adjacent to the first GP is not used to map data (including service data and control signaling) or a signal, and the sixth time domain sub-resource is used to map the data of the second service. It can be learned from the foregoing description that, in addition to the first GP, the available duration in which the master node switches from the first frequency domain resource to the second frequency domain resource may further include some time domain sub-resources in the first time domain resource that are adjacent to the first GP and/or some time domain sub-resources in the second time domain resource that are adjacent to the first GP. This further ensures that the master node has sufficient time to perform frequency domain resource switching.

Optionally, in some possible implementations, a type of the first frequency domain resource and the second frequency domain resource each includes a carrier, a subcarrier, or a subchannel, and/or a type of the first time domain resource unit includes a subframe, a frame, and a slot.

According to a fourth aspect, a data transmission method is provided. The data transmission is performed between a slave node and a master node. The master node manages the slave node, has a function of allocating resources, and is responsible for allocating resources to the slave node. The slave node is scheduled by the master node to communicate with the master node by using the resources allocated by the master node. The method is performed by the master node, or the method may be performed by a chip or an integrated circuit configured on the master node. This is not limited in this application.

The method includes: The master node transmits data of a first service to a first slave node on a second time domain resource in a first time domain resource unit by using a first frequency domain resource. The master node transmits data of a second service to a second slave node on a third time domain resource in a second time domain resource unit by using a second frequency domain resource. The first time domain resource unit is adjacent to the second time domain resource unit in time domain. The first time domain resource unit sequentially includes, in time domain, a first time domain resource, a first guard period, the second time domain resource, and a second guard period. The second time domain resource unit sequentially includes, in time domain, the third time domain resource, a third guard period, a fourth time domain resource, and a fourth guard period.

It may be understood that data transmission between the first slave node and the master node and data transmission between the second slave node and the master node include two cases. First, if the master node sends the data of the first service to the first slave node, the master node receives the data of the second service that is sent by the second slave node. Second, if the master node receives the data of the first service that is sent by the first slave node, the master node sends the data of the second service to the second slave node.

In time domain, the second time domain resource and the third time domain resource are separated by the second GP. In other words, available duration in which the master node switches from a first frequency domain resource to a second frequency domain resource includes the second GP. It may be understood that the master node performs frequency domain resource switching in the second GP between the second time domain resource and the third time domain resource, and simultaneously completes switching from receiving to sending or from sending to receiving. In addition, a component capability of the master node is stronger than that of the slave node, and can support frequency domain resource switching to be completed in a relatively short time. Therefore, in this embodiment, it can be ensured that the master node has sufficient time to perform frequency domain resource switching, and normal transmission between the master node and the first slave node and normal transmission between the master node and the second slave node are not affected.

Optionally, in some possible implementations, the second time domain resource is used to map information (downlink information) sent by the master node, and the third time domain resource is used to map information (uplink information) received by the master node. Alternatively, the second time domain resource is used to map information (uplink information) received by the master node, and the third time domain resource is used to map information (downlink information) sent by the master node. In this implementation, the structure of the first time domain resource unit can be flexibly configured, thereby improving scalability of this solution.

Optionally, in some possible implementations, after the master node completes frequency domain resource switching, the master node first transmits a target signal to the second slave node on a first time domain sub-resource in the third time domain resource by using the second frequency domain resource. Then, the master node transmits second data in a target service to the second slave node on a second time domain sub-resource in the third time domain resource by using the second frequency domain resource. The target signal is used for channel estimation. The first time domain sub-resource is located before the second time domain sub-resource in time domain. In other words, the master node first sends, on a part of the third time domain resource, the target signal to the second slave node, and then sends, on some other part of the third time domain resource, the data of the second service to the second slave node. Alternatively, the master node first receives, on a part of the third time domain resource, the target signal sent by the second slave node, and then receives, on some other part of the third time domain resource, the data of the second service that is sent by the second slave node. After the second slave node (the master node) determines a channel based on the received target signal, the second slave node (the master node) transmits the data of the second service, thereby reducing a transmission delay of the data of the second service.

Optionally, in some possible implementations, the second time domain resource may include two time domain sub-resources (for example, a third time domain sub-resource and a fourth time domain sub-resource) in time domain. The fourth time domain sub-resource adjacent to the second GP is not used to map data (including service data and control signaling) or a signal, and the third time domain sub-resource is used to map the data of the first service; and/or the third time domain resource may include two time domain sub-resources (for example, a fifth time domain sub-resource and a sixth time domain sub-resource) in time domain, where the fifth time domain sub-resource adjacent to the second GP is not used to map data (including service data and control signaling) or a signal, and the sixth time domain sub-resource is used to map the data of the second service. It can be learned from the foregoing description that, in addition to the second GP, the available duration in which the master node switches from the first frequency domain resource to the second frequency domain resource may further include some time domain sub-resources in the second time domain resource that are adjacent to the second GP and/or some time domain sub-resources in the third time domain resource that are adjacent to the second GP. This further ensures that the master node has sufficient time to perform frequency domain resource switching.

Optionally, in some possible implementations, the first time domain resource unit and the second time domain resource unit have a same time length. Further, the time length may be predefined or configured. For example, the time length may be 1/48 kHz, approximately equal to 20.833 microseconds.

Optionally, a type of the first frequency domain resource and the second frequency domain resource each includes a carrier, a subcarrier, or a subchannel, and/or a type of the first time domain resource unit and the second time domain resource unit each includes a subframe, a frame, or a slot.

According to a fifth aspect, a communications apparatus is provided, including:
a transmission unit, configured to transmit first data in a target service to a first communications apparatus on a first time domain resource in a first time domain resource unit by using a first frequency domain resource, where
the transmission unit is further configured to transmit second data in the target service to the first communications apparatus on a third time domain resource in a second time domain resource unit by using a second frequency domain resource.

The first time domain resource unit is adjacent to the second time domain resource unit in time domain. The first time domain resource unit sequentially includes, in time domain, the first time domain resource, a first guard period, a second time domain resource, and a second guard period. The second time domain resource unit sequentially includes, in time domain, the third time domain resource, a third guard period, a fourth time domain resource, and a fourth guard period.

Optionally, in some possible implementations, the first time domain resource and the third time domain resource are used to map information sent by the first communications apparatus, and the second time domain resource and the fourth time domain resource are used to map information received by the first communications apparatus. Alternatively, the first time domain resource and the third time domain resource are used to map information received by the first communications apparatus, and the second time domain resource and the fourth time domain resource are used to map information sent by the first communications apparatus.

Optionally, in some possible implementations, the third time domain resource in the second time domain resource unit includes a first time domain sub-resource and a second time domain sub-resource, and the first time domain sub-resource is located before the second time domain sub-resource in time domain.

The transmission unit is specifically configured to: transmit a target signal to the first communications apparatus on the first time domain sub-resource by using the second frequency domain resource, where the target signal is used for channel estimation; and
transmit the second data in the target service to the first communications apparatus on the second time domain sub-resource by using the second frequency domain resource.

Optionally, in some possible implementations, the first time domain resource may include two time domain sub-resources (for example, a third time domain sub-resource and a fourth time domain sub-resource) in time domain. The fourth time domain sub-resource adjacent to the first GP is not used to map data (including service data and control signaling) or a signal, and the third time domain sub-resource is used to map the first data; and/or the third time domain resource may include two time domain sub-resources (for example, a fifth time domain sub-resource and a sixth time domain sub-resource) in time domain, where the fifth time domain sub-resource adjacent to the second GP is not used to map data (including service data and control signaling) or a signal, and the sixth time domain sub-resource is used to map the second data. It can be learned from the foregoing description that, in addition to the first GP, the second time domain resource, and the second GP, available duration in which the slave node switches from the first frequency domain resource to the second frequency domain resource may further include some time domain sub-resources in the first time domain resource that are adjacent to the first GP and/or some time domain sub-resources in the third time domain resource that are adjacent to the second GP. This further ensures sufficient time to perform frequency domain resource switching.

Optionally, in some possible implementations, the first time domain resource unit and the second time domain resource unit have a same time length. Further, the time length may be predefined or configured. For example, the time length may be 1/48 kHz, approximately equal to 20.833 microseconds.

Optionally, a type of the first frequency domain resource and the second frequency domain resource each includes a carrier, a subcarrier, or a subchannel, and/or a type of the first time domain resource unit and the second time domain resource unit each includes a subframe, a frame, or a slot.

According to a sixth aspect, a communications apparatus is provided, including:
a transmission unit, configured to transmit first data in a target service to a first communications apparatus on a second time domain resource in a first time domain resource unit by using a first frequency domain resource, where
the transmission unit is further configured to transmit second data in the target service to the first communications apparatus on a fourth time domain resource in a second time domain resource unit by using a second frequency domain resource.

The first time domain resource unit is adjacent to the second time domain resource unit in time domain. The first time domain resource unit sequentially includes, in time domain, a first time domain resource, a first guard period, the second time domain resource, and a second guard period. The second time domain resource unit sequentially includes, in time domain, a third time domain resource, a third guard period, the fourth time domain resource, and a fourth guard period.

Optionally, in some possible implementations, the first time domain resource and the third time domain resource are used to map information sent by the first communications apparatus, and the second time domain resource and the fourth time domain resource are used to map information received by the first communications apparatus. Alternatively, the first time domain resource and the third time domain resource are used to map information received by the first communications apparatus, and the second time domain resource and the fourth time domain resource are used to map information sent by the first communications apparatus.

Optionally, in some possible implementations, the fourth time domain resource in the second time domain resource unit includes a first time domain sub-resource and a second time domain sub-resource, and the first time domain sub-resource is located before the second time domain sub-resource in time domain.

The transmission unit is specifically configured to: transmit a target signal to the first communications apparatus on the first time domain sub-resource by using the second frequency domain resource, where the target signal is used for channel estimation; and
transmit the second data in the target service to the first communications apparatus on the second time domain sub-resource by using the second frequency domain resource.

Optionally, in some possible implementations, the second time domain resource may include two time domain sub-resources (for example, a third time domain sub-resource and a fourth time domain sub-resource) in time domain. The fourth time domain sub-resource adjacent to the second GP is not used to map data (including service data and control signaling) or a signal, and the third time domain sub-resource is used to map the first data; and/or the fourth time domain resource may include two time domain sub-resources (for example, a fifth time domain sub-resource and a sixth time domain sub-resource) in time domain, where the fifth time domain sub-resource adjacent to the third GP is not used to map data (including service data and control signaling) or a signal, and the sixth time domain sub-resource is used to map the second data. It can be learned from the foregoing description that, in addition to the second GP, the third time domain resource, and the third GP, available duration in which the slave node switches from the first frequency domain resource to the second frequency domain resource may further include some time domain sub-resources in the second time domain resource that are adjacent to the second GP and/or some time domain sub-resources in the fourth time domain resource that are adjacent to the third GP. This further ensures sufficient time to perform frequency domain resource switching.

Optionally, in some possible implementations, the first time domain resource unit and the second time domain resource unit have a same time length. Further, the time length may be predefined or configured. For example, the time length may be 1/48 kHz, approximately equal to 20.833 microseconds.

Optionally, a type of the first frequency domain resource and the second frequency domain resource each includes a carrier, a subcarrier, or a subchannel, and/or a type of the first time domain resource unit and the second time domain resource unit each includes a subframe, a frame, or a slot.

According to a seventh aspect, a communications apparatus is provided, including:
a transmission unit, configured to transmit data of a first service to a second communications apparatus on a first time domain resource in a first time domain resource unit by using a first frequency domain resource, where
the transmission unit is further configured to transmit data of a second service to a third communications apparatus on a second time domain resource in the first time domain resource unit by using a second frequency domain resource.

The first time domain resource unit sequentially includes, in time domain, the first time domain resource, a first guard period, the second time domain resource, and a second guard period.

Optionally, in some possible implementations, the first time domain resource is used to map information sent by the second communications apparatus, and the second time domain resource is used to map information received by the third communications apparatus. Alternatively, the first time domain resource is used to map information received by the second communications apparatus, and the second time domain resource is used to map information sent by the third communications apparatus.

Optionally, in some possible implementations, the second time domain resource in the first time domain resource unit includes a first time domain sub-resource and a second time domain sub-resource, and the first time domain sub-resource is located before the second time domain sub-resource in time domain.

The transmission unit is specifically configured to: transmit a target signal to the third communications apparatus on the first time domain sub-resource by using the second frequency domain resource, where the target signal is used for channel estimation; and
transmit the data of the second service to the third communications apparatus on the second time domain sub-resource by using the second frequency domain resource.

Optionally, in some possible implementations, the first time domain resource may include two time domain sub-resources (for example, a third time domain sub-resource and a fourth time domain sub-resource) in time domain. The fourth time domain sub-resource adjacent to the first GP is not used to map data (including service data and control signaling) or a signal, and the third time domain sub-resource is used to map the data of the first service; and/or the second time domain resource may include two time domain sub-resources (for example, a fifth time domain sub-resource and a sixth time domain sub-resource) in time domain, where the fifth time domain sub-resource adjacent to the first GP is not used to map data (including service data and control signaling) or a signal, and the sixth time domain sub-resource is used to map the data of the second service. It can be learned from the foregoing description that, in addition to the first GP, available duration in which the master node switches from the first frequency domain resource to the second frequency domain resource may further include some time domain sub-resources in the first time domain resource that are adjacent to the first GP and/or some time domain sub-resources in the second time domain resource that are adjacent to the first GP. This further ensures that the master node has sufficient time to perform frequency domain resource switching.

Optionally, in some possible implementations, a type of the first frequency domain resource and the second frequency domain resource each includes a carrier, a subcarrier, or a subchannel, and/or a type of the first time domain resource unit includes a subframe, a frame, and a slot.

According to an eighth aspect, a communications apparatus is provided, including:
a transmission unit, configured to transmit data of a first service to a second communications apparatus on a second time domain resource in a first time domain resource unit by using a first frequency domain resource, where
the transmission unit is further configured to transmit data of a second service to a third communications apparatus on a third time domain resource in a second time domain resource unit by using a second frequency domain resource.

The first time domain resource unit is adjacent to the second time domain resource unit in time domain. The first time domain resource unit sequentially includes, in time domain, a first time domain resource, a first guard period, the second time domain resource, and a second guard period. The second time domain resource unit sequentially includes, in time domain, the third time domain resource, a third guard period, a fourth time domain resource, and a fourth guard period.

Optionally, in some possible implementations, the second time domain resource is used to map information sent by the second communications apparatus, and the third time domain resource is used to map information received by the third communications apparatus. Alternatively, the second time domain resource is used to map information received by the second communications apparatus, and the third time domain resource is used to map information sent by the third communications apparatus.

Optionally, in some possible implementations, the third time domain resource in the second time domain resource unit includes a first time domain sub-resource and a second time domain sub-resource, and the first time domain sub-resource is located before the second time domain sub-resource in time domain.

The transmission unit is specifically configured to: transmit a target signal to the third communications apparatus on the first time domain sub-resource by using the second frequency domain resource, where the target signal is used for channel estimation; and
transmit the data of the second service to the third communications apparatus on the second time domain sub-resource by using the second frequency domain resource.

Optionally, in some possible implementations, the second time domain resource may include two time domain sub-resources (for example, a third time domain sub-resource and a fourth time domain sub-resource) in time domain. The fourth time domain sub-resource adjacent to the second GP is not used to map data (including service data and control signaling) or a signal, and the third time domain sub-resource is used to map the data of the first service; and/or the third time domain resource may include two time domain sub-resources (for example, a fifth time domain sub-resource and a sixth time domain sub-resource) in time domain, where the fifth time domain sub-resource adjacent to the second GP is not used to map data (including service data and control signaling) or a signal, and the sixth time domain sub-resource is used to map the data of the second service. It can be learned from the foregoing description that, in addition to the second GP, available duration in which the master node switches from the first frequency domain resource to the second frequency domain resource may further include some time domain sub-resources in the second time domain resource that are adjacent to the second GP and/or some time domain sub-resources in the third time domain resource that are adjacent to the second GP. This further ensures that the master node has sufficient time to perform frequency domain resource switching.

Optionally, in some possible implementations, the first time domain resource unit and the second time domain resource unit have a same time length. Further, the time length may be predefined or configured. For example, the time length may be 1/48 kHz, approximately equal to 20.833 microseconds.

Optionally, a type of the first frequency domain resource and the second frequency domain resource each includes a carrier, a subcarrier, or a subchannel, and/or a type of the first time domain resource unit and the second time domain resource unit each includes a subframe, a frame, or a slot.

According to a ninth aspect, a communications apparatus is provided, including a processor, a memory, and a transceiver, where the processor, the memory, and the transceiver are connected to each other by using a line, and the memory stores instructions. The processor is configured to control, by invoking the instructions stored in the memory, the transceiver to perform the data transmission method provided in any one of the implementations of the first aspect to the fourth aspect.

According to a tenth aspect, a chip or a chip system is provided, including at least one processor, a memory, and an interface circuit, where the memory, the interface circuit, and the at least one processor are connected to each other by using a line, the at least one memory stores instructions, and the processor is configured to invoke the instructions to perform the data transmission method provided in any one of the implementations of the first aspect to the fourth aspect.

According to an eleventh aspect, a computer-readable storage medium is provided. The computer-readable storage medium stores a computer program. When the computer program is executed by a communications apparatus, the communications apparatus implements the data transmission method provided in any one of the possible implementations of the first aspect to the fourth aspect.

According to a twelfth aspect, a computer program product including instructions is provided. When the instructions are executed by a computer, a communications apparatus implements the data transmission method provided in any one of the possible implementations of the first aspect to the fourth aspect.

### BRIEF DESCRIPTION OF DRAWINGS

FIG. 1 is a schematic diagram of a scenario architecture of a data transmission method according to an embodiment of this application;
FIG. 2 is a schematic diagram of a structure of a time domain resource unit according to an embodiment of this application;
FIG. 3 is a schematic diagram of a structure of another time domain resource unit according to an embodiment of this application;
FIG. 4 is a schematic diagram of a first data transmission method according to an embodiment of this application;
FIG. 5 is a schematic diagram of an embodiment in which a slave node performs frequency domain resource switching;
FIG. 6 is a schematic diagram of a second data transmission method according to an embodiment of this application;
FIG. 7 is a schematic diagram of another embodiment in which a slave node performs frequency domain resource switching;
FIG. 8 is a schematic diagram of a third data transmission method according to an embodiment of this application;
FIG. 9 is a schematic diagram of an embodiment in which a master node performs frequency domain resource switching;
FIG. 10 is a schematic diagram of a fourth data transmission method according to an embodiment of this application;
FIG. 11 is a schematic diagram of another embodiment in which a master node performs frequency domain resource switching;
FIG. 12 is a schematic diagram of a structure of a communications apparatus according to an embodiment of this application;
FIG. 13 is a schematic diagram of a structure of another communications apparatus according to an embodiment of this application; and
FIG. 14 is a schematic diagram of a structure of a chip according to an embodiment of this application.

### DESCRIPTION OF EMBODIMENTS

In the specification, claims, and accompanying drawings of this application, the terms such as "first", "second", "third", and "fourth" (if any) are intended to distinguish between similar objects but do not necessarily indicate a specific order or sequence. It should be understood that the data termed in such a way are interchangeable in proper circumstances so that embodiments of this application described herein can be implemented in an order other than these orders illustrated or described herein. In addition, the terms such as "include", "have", and any other variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

A communications apparatus in embodiments of this application may be a vehicle-mounted device such as a cockpit domain controller, a vehicle-mounted speaker, or a vehicle-mounted microphone, or may be an electronic device such as a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, or a virtual reality device.

The following first explains some terms in this application, to facilitate understanding by a person skilled in the art.
(1) CDC: Cockpit Domain Controller or Control Domain Cockpit, which is referred to as a head unit for short. In addition to conventional radio, music and video playback, and navigation functions, the current head unit further has a cellular communication function (3G, 4G, or the like), and can implement human-to-vehicle information communication and vehicle-to-outside information communication with reference to a CAN-BUS technology for a vehicle. This enhances functions related to user experience, services, and security.
(2) Master node and slave nodes: There are two types of nodes in terms of logical function, that is, a master node and a slave node. The master node manages the slave node, has a function of allocating resources, and is responsible for allocating resources to the slave node. The slave node is scheduled by the master node to communicate with the master node by using the resources allocated by the master node. The nodes may be various apparatuses. For example, the master node is a mobile phone, and the slave node is a headset. The mobile phone establishes a communication connection to the headset to implement data exchange. The mobile phone manages the headset. The mobile phone has a function of allocating resources, and can allocate resources to the headset.
(3) Communications domain: The communications domain is a system including a group of communications nodes that have a communications relationship, and the communication connection relationship between the communications nodes. One apparatus or device may be in a plurality of communications domains. For example, when a mobile phone performs wireless communication with a headset, the mobile phone is in a communications domain a that includes the mobile phone and the headset. In the communications domain a, the mobile phone is a master node, and the headset is a slave node. Then, after the mobile phone detects a CDC and establishes a wireless connection to the CDC, the mobile phone is also in a communications domain b that includes the mobile phone and the CDC. In the communications domain b, the CDC is a master node, the mobile phone is a slave node, and the mobile phone is scheduled by the CDC. The communications domain b may further include another slave node, for example, a vehicle-mounted speaker or microphone.

A wireless communication scenario to which a data transmission method provided in embodiments of this application is applied may include wide area wireless communication, for example, communication between a plurality of base stations and a plurality of user equipments (User Equipment, UE). The base station is used as a master node, the UE is used as a slave node, the base station allocates resources to the UE, and the UE is scheduled by the base station. The wireless communication scenario may alternatively include a vehicle-mounted wireless communication scenario, for example, communication between a CDC and a vehicle-mounted speaker, a vehicle-mounted microphone, or a mobile phone, and communication between a mobile phone and a wearable device such as a headset. The wireless communication scenario may alternatively include local area wireless communication, for example, communication between a plurality of access points (Access Point, AP) and a plurality of stations (Station).

To facilitate understanding of the data transmission method in embodiments of this application, the following specifically uses the in-vehicle wireless communication scenario as an example for description. However, the communications method in embodiments of this application is not limited to the in-vehicle communication scenario.

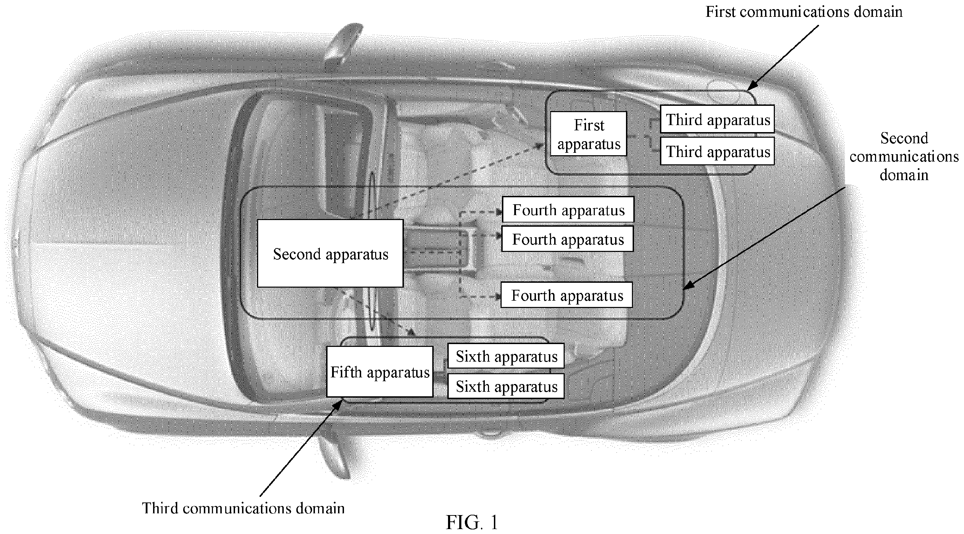

FIG. 1 is a schematic diagram of a scenario architecture of a data transmission method according to an embodiment of this application. The scenario architecture may include but is not limited to a first apparatus, a second apparatus, a third apparatus, and a fourth apparatus. The first apparatus may be a mobile phone. The second apparatus may be a CDC. There may be a plurality of third apparatuses, for example, wearable devices such as a headset, and a band. There may be a plurality of fourth apparatuses, for example, devices such as a vehicle-mounted speaker, and a vehicle-mounted microphone. It can be learned from the foregoing descriptions that the first apparatus is different from the second apparatus. In some possible scenarios, the first apparatus and the second apparatus may be of a same type. For example, the first apparatus and the second apparatus each are a CDC, but the first apparatus and the second apparatus represent different CDCs.

The second apparatus may be a device that performs control management such as allocation and coordination of communications resources in an in-vehicle wireless communication scenario. The second apparatus establishes a communication connection to at least one fourth apparatus, to constitute a second communications domain. The first apparatus establishes a communication connection to at least one third apparatus, to constitute a first communications domain.

In a possible implementation, the scenario architecture in embodiments of this application may further include a communications domain including more apparatuses, for example, a fifth apparatus and a sixth apparatus. This is not limited in this application.

During actual application, interference may occur on frequency domain resources used by a master node and a slave node in the communications domain. To reduce the interference, the master node and the slave node need to perform frequency domain resource switching, to use better frequency domain resources. Alternatively, a case in which frequency domain resources need to be scheduled occurs. For example, if a frequency domain resource used by a mobile phone in an out-vehicle environment is different from that used by the mobile phone in an in-vehicle environment, the mobile phone also needs to perform frequency domain resource switching when the mobile phone enters the in-vehicle environment from the out-vehicle environment. However, the frequency domain resource switching process takes time. If there is no sufficient time to complete the frequency domain resource switching, service transmission quality is affected.

Therefore, this application provides a data transmission method. Some time domain resources are reserved on a time domain resource unit used to transmit a service for frequency domain resource switching. This ensures sufficient time to complete frequency domain resource switching, and ensures service transmission quality and stability of a service delay.

The following describes in detail embodiments provided in this application with reference to the accompanying drawings.

It should be noted that, because capabilities of communications apparatuses in a communications domain are different, time needed for performing frequency domain resource switching is also different. For example, a master node has a relatively strong capability, and may support frequency domain resource switching to be completed in a relatively short time. A slave node has a relatively weak capability, and needs a relatively long time to complete frequency domain resource switching. Therefore, the following separately describes the embodiments from perspectives of a master node and a slave node. It should be understood that specific forms of the master node and the slave node are not limited in embodiments of this application. For ease of description, the master node and the slave node are uniformly used as execution bodies for description in the following.

The following first describes a time domain resource unit used for information transmission between the master node and the slave node.

It should be noted that all time domain resource units have a same length in time domain. The time domain resource unit can be further divided in time domain. For example, the time domain resource unit may include a plurality of time domain resources and guard periods (guard period, GP), the time domain resource may further include a plurality of time domain sub-resources, and each time domain resource or each time domain sub-resource may further include one or more symbols (symbol). Optionally, the symbol may be a symbol based on an orthogonal frequency division multiplexing (Orthogonal Frequency Division Multiplexing, OFDM) technology. All time domain resources may have same lengths or different lengths in time domain. All time domain sub-resource may have same lengths or different lengths in time domain. It should be understood that the time domain resource unit, the time domain resource, the time domain sub-resource, and the symbol are merely used for differentiation at a resource configuration granularity, and names of the time domain resource unit, the time domain resource, the time domain sub-resource, and the symbol are not limited in this application. For ease of description, the following uniformly uses a symbol as a basic unit in time domain for description.

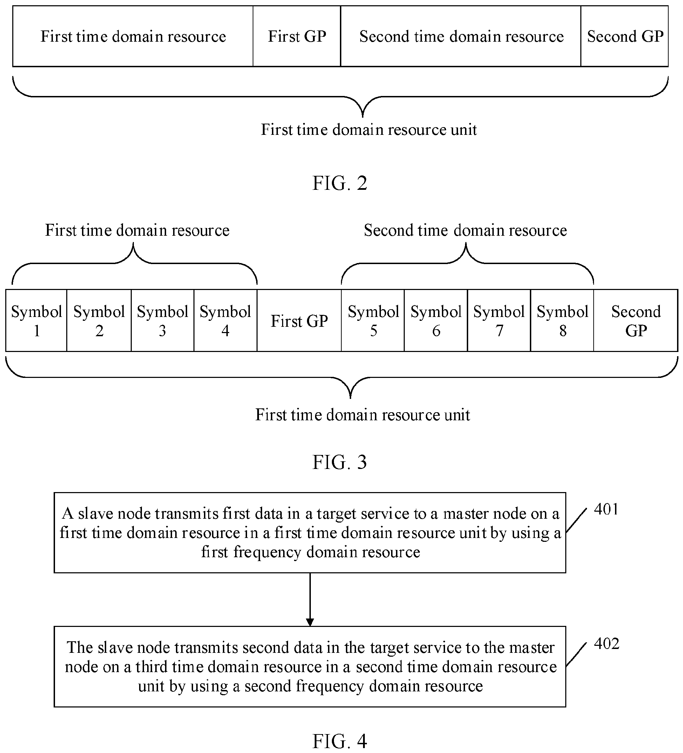

FIG. 2 is a schematic diagram of a structure of a time domain resource unit according to an embodiment of this application. As shown in FIG. 2, a first time domain resource unit sequentially includes, in time domain, a first time domain resource, a first GP, a second time domain resource, and a second GP. The time domain resource unit herein reflects a scheduling granularity or a resource configuration granularity.

It may be understood that the first time domain resource includes at least one first symbol. The second time domain resource includes at least one second symbol. Information to which the first symbol is mapped is different from information to which the second symbol is mapped.

Optionally, the first symbol is used to map information sent by a slave node to a master node (that is, the first symbol is an uplink symbol), and the second symbol is used to map information sent by the master node to the slave node (that is, the second symbol is a downlink symbol). Alternatively, the first symbol is used to map information sent by the master node to the slave node (that is, the first symbol is a downlink symbol), and the second symbol is used to map information sent by the slave node to the master node (that is, the second symbol is an uplink symbol).

It may be understood that the first symbol, the second symbol, the uplink symbol, and the downlink symbol are only names, and the names do not limit the protection scope of embodiments of this application. In a future protocol, any name that can represent the same function is applicable to embodiments of this application.

It should be noted that the first GP and the second GP are not used to transmit any data or signal, and the master node may implement receive-to-transmit conversion or transmit-to-receive conversion in the first GP and the second GP.

Optionally, it may be specified that one first symbol in the first time domain resource is used to map to-be-transmitted data, or it may be specified that a plurality of first symbols in the first time domain resource are used to map to-be-transmitted data. This is not specifically limited herein. For example, the first time domain resource sequentially includes 10 first symbols, and the 5^{th} first symbol may be used to map data. Alternatively, the 1^{st} to the 5^{th} first symbols may be used to map data. Similarly, it may be specified that one or more second symbols in the second time domain resource are used to map the to-be-transmitted data.

Optionally, FIG. 3 is a schematic diagram of a structure of another time domain resource unit according to an embodiment of this application. In some preferred implementations, there may be eight first symbols and second symbols in total. Specifically, quantities of the first symbols and the second symbols may be the same or may be different. For example, as shown in FIG. 3, a first time domain resource includes four first symbols in total: a symbol 1 to a symbol 4, and a second time domain resource includes four second symbols in total: a symbol 5 to a symbol 8. For another example, a first time domain resource includes three first symbols, and a second time domain resource includes five second symbols. For still another example, a first time domain resource includes five first symbols, and a second time domain resource includes three second symbols. In addition, quantities of first symbols in different time domain resource units may be the same or may be different. Quantities of second symbols in different time domain resource units may be the same or may be different. It should be understood that a specific quantity of first symbols and a specific quantity of second symbols are not limited in this application.

Optionally, duration of a first GP and duration of a second GP may be the same or may be different. This is not specifically limited herein.

It should be understood that a target service in this application is usually a service that has a high delay requirement and of which data volume and/or a periodicity are/is relatively stable. For this type of service, semi-persistent scheduling (Semi-Persistent Scheduling, SPS) may be performed for resource scheduling between a master node and a slave node. That is, after the slave node applies for resources from the master node, the master node periodically allocates the resources to the slave node. For example, if the target service is an audio service, and sampling is performed at a frequency of 48 kHz, a service periodicity of the target service is 1/48 kHz that is approximately equal to 20.833 µs. Optionally, duration of one time domain resource unit in this application may correspond to a service periodicity of a periodic target service. For example, the duration of one time domain resource unit is equal to the service periodicity or an integer multiple of the service periodicity. This is not specifically limited herein.

Optionally, the time domain resource unit may be specifically a mini-slot (mini-slot), a slot (slot), a subframe (subframe), or a frame. Further, a length of the time domain resource unit may be preconfigured or predefined. Optionally, for concepts of the mini-slot, the slot, the subframe, and the frame, refer to related concepts in a long term evolution (Long Term Evolution, LTE) network or a 5G network. However, specific time lengths of the mini-slot, the slot, the subframe, and the frame may be the same as or different from related concepts in the LTE or the 5G network. This is not specifically limited in this application. For example, one frame may include 10 subframes, duration of one subframe in time domain may be 1 millisecond (ms), one subframe may include a plurality of slots, one slot includes 7 or 14 symbols, and one mini-slot may include at least one symbol (for example, two symbols, seven symbols, or 14 symbols, or any quantity of symbols less than or equal to 14 symbols). Optionally, the time domain resource unit may be a frame, and duration of the frame may be approximately equal to 20.833 microseconds. Specifically, a name of the time domain resource unit in the protocol is not limited in this application.

The foregoing describes the time domain resource unit provided in this application, and the following describes a data transmission method provided in this application.

FIG. 4 is a schematic diagram of a first data transmission method according to an embodiment of this application. The data transmission method includes the following steps.

401: A slave node transmits first data in a target service to a master node on a first time domain resource in a first time domain resource unit by using a first frequency domain resource.

In this embodiment, for a description of the first time domain resource unit, refer to the related descriptions of the first time domain resource unit shown in FIG. 2 and FIG. 3. Details are not described herein again.

It should be understood that, that the slave node transmits the first data in the target service to the master node by using the first frequency domain resource includes the following two cases. First, the slave node sends the first data in the target service to the master node by using the first frequency domain resource, that is, a first symbol in the first time domain resource is an uplink symbol. Second, the slave node receives, by using the first frequency domain resource, the first data in the target service that is sent by the master node, that is, a first symbol in the first time domain resource is a downlink symbol.

402: The slave node transmits second data in the target service to the master node on a third time domain resource in a second time domain resource unit by using a second frequency domain resource.

It should be noted that the first data and the second data are continuous data or associated data in the target service. For example, if data in the target service is not completely transmitted in a current time domain resource unit, remaining data continues to be transmitted in a subsequent time domain resource unit. For another example, the data in the target service is periodically transmitted, the first data in a first periodicity is transmitted in the current time domain resource unit, and the second data in a second periodicity is transmitted in the subsequent time domain resource. Content of the first data and the second data is not specifically limited in this application.

It should be noted that the first time domain resource unit is adjacent to the second time domain resource unit in time domain. The second domain resource time unit sequentially includes, in time domain, the third time domain resource, a third GP, a fourth time domain resource, and a fourth GP. A structure of the second time domain resource unit is similar to a structure or a pattern (Pattern) of the first time domain resource unit. To be specific, for specific structures of the time domain resource units, the first time domain resource corresponds to the third time domain resource, a first GP corresponds to the third GP, the second time domain resource corresponds to the fourth time domain resource, and a second GP corresponds to a fourth GP. For details, refer to the related descriptions of the first time domain resource unit shown in FIG. 2 and FIG. 3. Details are not described herein again.

Optionally, total lengths of the first time domain resource unit and the second time domain resource unit are the same in time domain. Specifically, the first time domain resource unit and the second time domain resource unit have a same time length. Further, the time length may be predefined or configured. For example, the time length may be 1/48 kHz, approximately equal to 20.833 microseconds. However, a length of each part in the first time domain resource unit and a length of each corresponding part in the second time domain resource unit may be the same or may be different in time domain. For example, lengths of the first GP and the third GP may be the same or may be different in time domain. Lengths of the second GP and the fourth GP may be the same or may be different in time domain. Lengths of the first time domain resource and the third time domain resource may be the same or may be different in time domain. Lengths of the second time domain resource and the fourth time domain resource may be the same or may be different in time domain. In addition, lengths of the first time domain resource and the second time domain resource may be the same or may be different in time domain. Lengths of the first GP and the second GP may be the same or may be different in time domain. Lengths of the third time domain resource and the fourth time domain resource may be the same or may be different in time domain. Lengths of the third GP and the fourth GP may be the same or may be different in time domain. It should be understood that, on a premise that total lengths of all time domain resource units are the same, lengths of components in each time domain resource unit are not limited in this application, and may be flexibly configured or defined during actual application, thereby improving scalability of this application.

Optionally, in terms of type, slave nodes may be classified into slave nodes configured to send information to the master node (uplink transmission) and slave nodes configured to receive information sent by the master node (downlink transmission). In this case, if the slave node sends the first data in the target service to the master node on the first time domain resource, the slave node sends the second data in the target service to the master node on the third time domain resource. If the slave node receives, on the first time domain resource, the first data in the target service that is sent by the master node, the slave node receives, on the third time domain resource, the second data in the target service that is sent by the master node.

It may be understood that the slave node transmits the first data to the master node by using the first frequency domain resource, and transmits the second data to the master node by using the second frequency domain resource. In other words, after transmission of the first data ends and before transmission of the second data starts, the slave node completes frequency domain resource switching, that is, switches from the first frequency domain resource to the second frequency domain resource.

Optionally, the first frequency domain resource and the second frequency domain resource may be a carrier, a subcarrier, a subchannel, a bandwidth part (bandwidth part, BWP), or the like. This is not specifically limited herein. The carrier may be a continuous frequency band used by a communications system, the continuous frequency band may be further divided into a plurality of sub-bands, and each sub-band or the plurality of sub-bands may be considered as one sub-channel. A concept of the subcarrier in this application is the same as that of a subcarrier in the LTE network and the 5G network. Details are not described herein again. The BWP is a segment of continuous or discontinuous frequency domain resources, and is specifically the same as a concept related to a BWP in the 5G network. For example, the BWP may be a plurality of consecutive physical resource blocks in frequency domain, and may be configured by the master node (for example, a network device) for the slave node (for example, a terminal device), and the slave node receives or sends data on the BWP. In other words, frequency domain resource switching may be performed by using a carrier or a subcarrier as a basic unit, or may be performed through a subchannel or by using a BWP as a basic unit.

In some possible implementations, the switching from the first frequency domain resource to the second frequency domain resource may be scheduling-based, preconfigured, or predefined.

For example, the master node sends signaling to the slave node, where the signaling is used to indicate that transmission of the data of the target service is switched from the first frequency domain resource to the second frequency domain resource. Optionally, the signaling may be used to further indicate a switching moment of the frequency domain resources. Specifically, the signaling may be higher layer signaling or physical layer signaling, and the higher layer signaling or the physical layer signaling may further include unicast signaling, broadcast information, multicast signaling, and the like.

For another example, a pre-configuration file is written into the master node or the slave node in a production or maintenance process. The pre-configuration file is used to indicate that transmission of the target service may be switched between a plurality of frequency domain resources and switching moments of the frequency domain resources

For still another example, the frequency domain resource switching is predefined in a standard or a protocol. Optionally, a plurality of frequency domain resources are predefined in the standard or the protocol, and transmission of the target service performed by the slave node may be switched among the plurality of frequency domain resources.

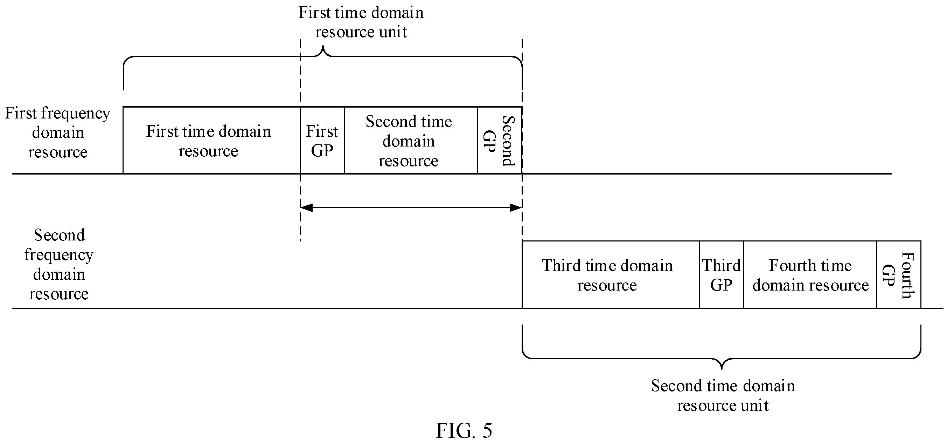

FIG. 5 is a schematic diagram of an embodiment in which a slave node performs frequency domain resource switching. As shown in FIG. 5, in time domain, a first time domain resource and a third time domain resource are separated by a first GP, a second time domain resource, and a second GP. In other words, available duration in which the slave node switches from a first frequency domain resource to a second frequency domain resource includes the first GP, the second time domain resource, and the second GP.

It may be understood that, if the first time domain resource includes an uplink symbol, the third time domain resource also includes an uplink symbol. If the first time domain resource includes a downlink symbol, the third time domain resource also includes a downlink symbol.

In the embodiment shown in FIG. 5, to ensure normal transmission of first data and second data, a slave node that performs uplink transmission sends the first data to a master node on the first time domain resource including an uplink symbol, and sends the second data to the master node on the third time domain resource including an uplink symbol. Therefore, the slave node may perform frequency domain resource switching in the first GP, on the second time domain resource including a downlink symbol, and in the second GP, to ensure that there is sufficient time to perform frequency domain resource switching, and that normal transmission of a current target service is not affected.

Similarly, to ensure normal transmission of the first data and the second data, a slave node that performs downlink transmission receives, on the first time domain resource including a downlink symbol, the first data sent by the master node, and receives, on the third time domain resource including a downlink symbol, the second data sent by the master node. Therefore, the slave node may perform frequency domain resource switching in the first GP, on the second time domain resource including an uplink symbol, and in the second GP, to ensure that there is sufficient time to perform frequency domain resource switching, and that normal transmission of a current target service is not affected.

It should be noted that different types of services transmitted between the slave node and the master node have different delay requirements. One type of service has a high delay requirement and a relatively stable data volume and/or periodicity. This application is mainly used to ensure normal transmission of this type of service having the high delay requirement in a frequency domain resource switching process.

Optionally, one symbol or more continuous symbols adjacent to the first GP in the first time domain resource may not be used to map the first data. In other words, the first time domain resource may include two time domain sub-resources (for example, a third time domain sub-resource and a fourth time domain sub-resource) in time domain. The fourth time domain sub-resource adjacent to the first GP is not used to map data (including service data and control signaling) or a signal, and the third time domain sub-resource is used to map the first data. In addition, one symbol or more continuous symbols adjacent to the second GP in the third time domain resource may not be used to map the second data. Similarly, the third time domain resource may include two time domain sub-resources (for example, a fifth time domain sub-resource and a sixth time domain sub-resource) in time domain. The fifth time domain sub-resource adjacent to the second GP is not used to map data (including service data and control signaling) or a signal, and the sixth time domain sub-resource is used to map the second data. It can be learned from the foregoing description that, in addition to the first GP, the second time domain resource, and the second GP, the available duration in which the slave node switches from the first frequency domain resource to the second frequency domain resource may further include some time domain sub-resources in the first time domain resource that are adjacent to the first GP and/or some time domain sub-resources in the third time domain resource that are adjacent to the second GP. This further ensures sufficient time to perform frequency domain resource switching.

It should be noted that other time domain resource units each may also be divided with reference to the foregoing division manners of the time domain sub-resources in the first time domain resource unit and the second time domain resource unit. In a possible implementation, no data or signal is mapped to the time domain sub-resource (for example, the time domain sub-resource in the first time domain resource that is adjacent to the first GP and/or the time domain sub-resource in the third time domain resource that is adjacent to the second GP) related to the frequency domain resource switching. In addition to the time domain sub-resource related to the frequency domain resource switching, there may be a plurality of mapping manners for corresponding time domain sub-resources in another time domain resource unit. First, the corresponding time domain sub-resources may map data of the target service. Second, the corresponding time domain sub-resources may map data or a signal other than the data of the target service. Third, some of the corresponding time domain sub-resources may alternatively do not map data or a signal. Optionally, the corresponding time domain sub-resource in the another time domain resource unit may use any one of the three mapping manners, or use different combinations of the three mapping manners. For example, a corresponding time domain sub-resource in a time domain resource unit A uses the first mapping manner, and a corresponding time domain sub-resource in a time domain resource unit B uses the second mapping manner. Examples are not listed one by one herein.

Optionally, after the slave node completes frequency domain resource switching, the slave node first transmits a target signal to the master node on a first time domain sub-resource in the third time domain resource by using the second frequency domain resource. Then, the slave node transmits the second data in the target service to the master node on a second time domain sub-resource in the third time domain resource by using the second frequency domain resource. The target signal is used for channel estimation. The first time domain sub-resource is located before the second time domain sub-resource in time domain. It should be understood that the target signal is specifically used to estimate a channel of a frequency domain resource used for data transmission. For example, if the second data in the target service is transmitted by using a first subcarrier, a second subcarrier, and a third subcarrier in the second frequency domain resource, the target signal is used to perform channel estimation on at least one of the three subcarriers. In other words, after the slave node completes frequency domain resource switching, the slave node first sends the target signal to the master node, and then sends the second data to the master node. Alternatively, the slave node first receives the target signal sent by the master node, and then receives the second data sent by the master node. After the slave node (the master node) determines the channel based on the received target signal, the slave node (the master node) transmits the second data, thereby reducing a transmission delay of the data in the target service.

Optionally, the third time domain resource may include a plurality of symbols. Some symbols (the first time domain sub-resource) are used to map the target signal, and some other symbols (the second time domain sub-resource) are used to map the second data in the target service. With reference to the foregoing descriptions, the symbols to which the second data is mapped may be defined as an uplink symbol or a downlink symbol. In this case, for ease of differentiation, the symbol used to map the target signal may be defined as a special uplink symbol or a special downlink symbol. It should be understood that a name thereof does not limit the protection scope of embodiments of this application. In a future protocol, any name that can indicate the same function is applicable to embodiments of this application.

Optionally, during actual application, it may be specified in advance that some special symbols (including special uplink symbols or special downlink symbols) are reserved in two time domain resources of each time domain resource unit to specifically map the target signal, so that the slave node can randomly select two adjacent time domain resource units to complete frequency domain resource switching. Alternatively, some special symbols are reserved in two time domain resources of only some time domain resource units in each time domain resource unit to specifically map the target signal. In this case, the slave node may select two adjacent time domain resource units having the special symbols to complete frequency domain resource switching. It should be understood that the special symbol used to map the target signal may be obtained based on scheduling of the master node, preconfigured, or predefined. For example, the master node configures a special symbol in a time domain resource scheduled by the master node. For another example, a pre-configuration file may be written into the master node or the slave node in advance, and the pre-configuration file is used to indicate a special symbol. For still another example, a special symbol specifically used to map the target signal is predefined in a standard or a protocol.

Optionally, a type of the target signal may be a reference signal (Reference Signal), a synchronization signal (Synchronization Signal), or the like. This is not specifically limited herein.

It should be noted that the foregoing describes, with reference to FIG. 4 and FIG. 5, the embodiment in which the slave node performs frequency domain resource switching. In addition, based on the described structure of the time domain resource unit, the slave node may further have other selected duration to complete frequency domain resource switching. The following provides further description.

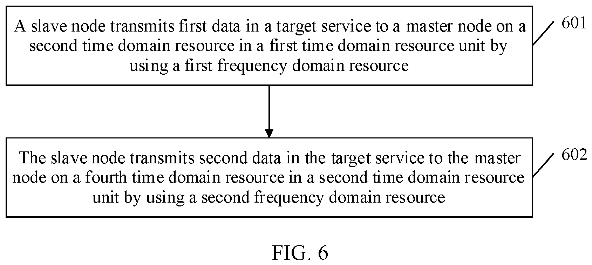

FIG. 6 is a schematic diagram of a second data transmission method according to an embodiment of this application. The data transmission method includes the following steps.

601: A slave node transmits first data in a target service to a master node on a second time domain resource in a first time domain resource unit by using a first frequency domain resource.

In this embodiment, for a description of the first time domain resource unit, refer to the related descriptions of the first time domain resource unit shown in FIG. 2 and FIG. 3. Details are not described herein again. A difference between step 601 and step 401 lies in that in step 401, the slave node transmits the first data on the first time domain resource, but in step 601, the slave node transmits the first data on the second time domain resource.

602: The slave node transmits second data in the target service to the master node on a fourth time domain resource in a second time domain resource unit by using a second frequency domain resource.

In this embodiment, after the slave node completes frequency domain resource switching, the slave node transmits the second data on the fourth time domain resource in the second time domain resource unit. For a description of the second time domain resource unit, refer to related descriptions in step 402. Details are not described herein again.

It should be noted that the first data and the second data are continuous data or associated data in the target service. For example, if data in the target service is not completely transmitted in a current time domain resource unit, remaining data continues to be transmitted in a subsequent time domain resource unit. For another example, the data in the target service is periodically transmitted, the first data in a first periodicity is transmitted in the current time domain resource unit, and the second data in a second periodicity is transmitted in the subsequent time domain resource. Content of the first data and the second data is not specifically limited in this application.

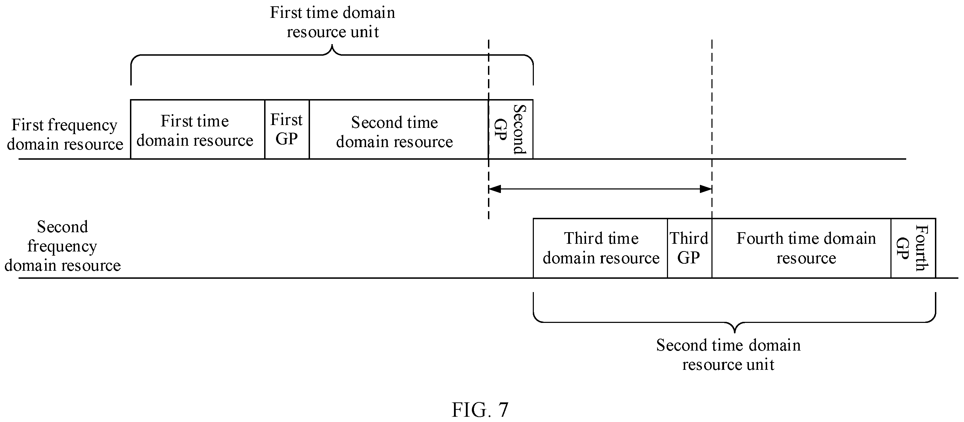

FIG. 7 is a schematic diagram of another embodiment in which a slave node performs frequency domain resource switching. As shown in FIG. 7, in time domain, a second time domain resource and a fourth time domain resource are separated by a second GP, a third time domain resource, and a third GP. In other words, available duration in which the slave node switches from a first frequency domain resource to a second frequency domain resource includes the second GP, the third time domain resource, and the third GP.

In the embodiment shown in FIG. 7, to ensure normal transmission of first data and second data, a slave node that performs uplink transmission sends the first data to a master node on the second time domain resource including an uplink symbol, and sends the second data to the master node on the fourth time domain resource including an uplink symbol. Therefore, the slave node may perform frequency domain resource switching in the second GP, on the third time domain resource including a downlink symbol, and in the third GP, to ensure that there is sufficient time to perform frequency domain resource switching, and that normal transmission of a current target service is not affected.

Similarly, to ensure normal transmission of the first data and the second data, a slave node that performs downlink transmission receives, on the second time domain resource including a downlink symbol, the first data sent by the master node, and receives, on the fourth time domain resource including a downlink symbol, the second data sent by the master node. Therefore, the slave node may perform frequency domain resource switching in the second GP, on the third time domain resource including an uplink symbol, and in the third GP, to ensure that there is sufficient time to perform frequency domain resource switching, and that normal transmission of a current target service is not affected.

A type of the first frequency domain resource and the second frequency domain resource each includes a carrier, a subcarrier, a subchannel, or the like. The switching from the first frequency domain resource to the second frequency domain resource may be scheduling-based, preconfigured, or predefined. For details, refer to the related descriptions in step 402. Details are not described herein again.

Optionally, one symbol or more continuous symbols adjacent to the second GP in the second time domain resource may not be used to map the first data. In other words, the second time domain resource may include two time domain sub-resources (for example, a third time domain sub-resource and a fourth time domain sub-resource) in time domain. The fourth time domain sub-resource adjacent to the second GP is not used to map data (including service data and control signaling) or a signal, and the third time domain sub-resource is used to map the first data. In addition, one symbol or more continuous symbols adjacent to the third GP in the fourth time domain resource may not be used to map the second data. Similarly, the fourth time domain resource may include two time domain sub-resources (for example, a fifth time domain sub-resource and a sixth time domain sub-resource) in time domain. The fifth time domain sub-resource adjacent to the third GP is not used to map data (including service data and control signaling) or a signal, and the sixth time domain sub-resource is used to map the second data. It can be learned from the foregoing description that, in addition to the second GP, the third time domain resource, and the third GP, the available duration in which the slave node switches from the first frequency domain resource to the second frequency domain resource may further include some time domain sub-resources in the second time domain resource that are adjacent to the second GP and/or some time domain sub-resources in the fourth time domain resource that are adjacent to the third GP. This further ensures sufficient time to perform frequency domain resource switching.

It should be noted that other time domain resource units each may also be divided with reference to the foregoing division manners of the time domain sub-resources in the first time domain resource unit and the second time domain resource unit. In a possible implementation, no data or signal is mapped to the time domain sub-resource (for example, the time sub-domain resource in the second time domain resource that is adjacent to the second GP and/or the time domain sub-resource in the fourth time domain resource that is adjacent to the third GP) related to the frequency domain resource switching. In addition to the time domain sub-resource related to the frequency domain resource switching, there may be a plurality of mapping manners for corresponding time domain sub-resources in another time domain resource unit. First, the corresponding time domain sub-resources may map data of the target service. Second, the corresponding time domain sub-resources may map data or a signal other than the data of the target service. Third, some of the corresponding time domain sub-resources may alternatively do not map data or a signal. Optionally, the corresponding time domain sub-resource in the another time domain resource unit may use any one of the three mapping manners, or use different combinations of the three mapping manners. For example, a corresponding time domain sub-resource in a time domain resource unit A uses the first mapping manner, and a corresponding time domain sub-resource in a time domain resource unit B uses the second mapping manner. Examples are not listed one by one herein.

Optionally, after the slave node completes frequency domain resource switching, the slave node first sends the target signal to the master node on a part of the fourth time domain resource, and then sends the second data to the master node on some other part of the fourth time domain resource. Alternatively, the slave node first receives, on a part of the fourth time domain resource, the target signal sent by the master node, and then receives, on some other part of the fourth time domain resource, the second data sent by the master node. After the slave node (the master node) determines the channel based on the received target signal, the slave node (the master node) transmits the second data, thereby reducing a transmission delay of the data in the target service. For descriptions of the target signal, refer to the related descriptions in step 402. Details are not described herein again.

The foregoing describes the embodiments in which the slave node performs frequency domain resource switching. The following describes, based on the structure of the time domain resource unit described above, embodiments in which the master node performs frequency domain resource switching. It can be learned from the foregoing description that the slave node can perform only uplink transmission or only downlink transmission. In other words, if the slave node performs uplink transmission before frequency domain resource switching, the slave node still performs uplink transmission after frequency domain resource switching. If the slave node performs downlink transmission before frequency domain resource switching, the slave node still performs downlink transmission after frequency domain resource switching. Different from the slave node, the master node may perform uplink transmission and downlink transmission. In other words, if the master node performs downlink transmission before frequency domain resource switching, the master node performs uplink transmission after frequency domain resource switching. If the master node performs uplink transmission before frequency domain resource switching, the master node performs downlink transmission after frequency domain resource switching.

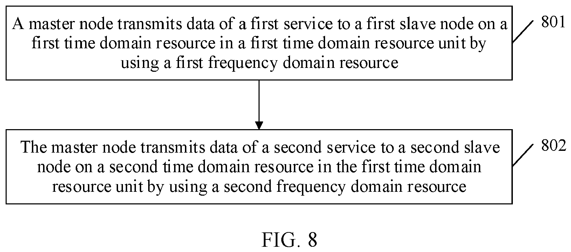

FIG. 8 is a schematic diagram of a third data transmission method according to an embodiment of this application. The data transmission method includes the following steps.

801: A master node transmits data of a first service to a first slave node on a first time domain resource in a first time domain resource unit by using a first frequency domain resource.

In this embodiment, that the master node transmits the data of the first service to the first slave node includes the following two cases. First, the master node sends the data of the first service to the first slave node. Second, the master node receives the data of the first service that is sent by the first slave node. For a description of the first time domain resource unit, refer to the related descriptions of the first time domain resource unit shown in FIG. 2 and FIG. 3. Details are not described herein again.

802: The master node transmits data of a second service to a second slave node on a second time domain resource in the first time domain resource unit by using a second frequency domain resource.

With reference to step 801, that the master node transmits the data of the second service to the second slave node also includes two cases. First, if the master node sends the data of the first service to the first slave node, the master node receives the data of the second service that is sent by the second slave node. Second, if the master node receives the data of the first service that is sent by the first slave node, the master node sends the data of the second service to the second slave node.

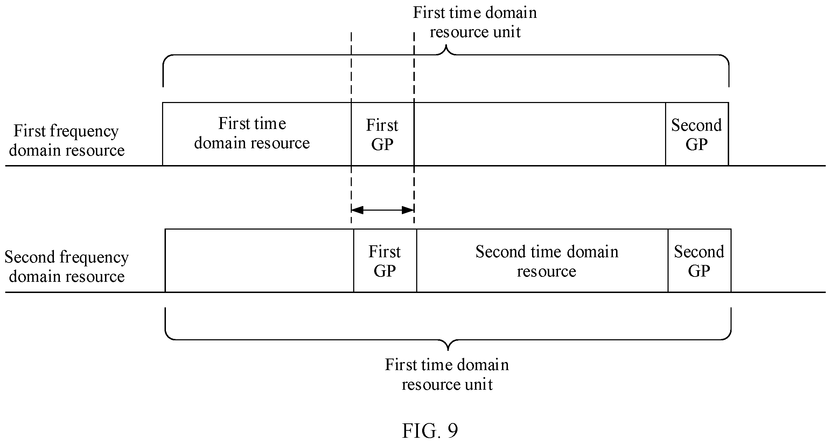

FIG. 9 is a schematic diagram of an embodiment in which a master node performs frequency domain resource switching. As shown in FIG. 9, in time domain, a first time domain resource and a second time domain resource are separated by a first GP. In other words, available duration in which the master node switches from a first frequency domain resource to a second frequency domain resource includes the first GP. It may be understood that the master node needs to perform both uplink transmission and downlink transmission in the first time domain resource unit. Therefore, the master node may perform frequency domain resource switching in the first GP between the first time domain resource and the second time domain resource, and complete switching from receiving to sending or from sending to receiving. In addition, a component capability of the master node is stronger than that of a slave node, and can support frequency domain resource switching to be completed in a relatively short time. Therefore, in this embodiment, it can be ensured that the master node has sufficient time to perform frequency domain resource switching, and normal transmission between the master node and the first slave node and normal transmission between the master node and the second slave node are not affected.

A type of the first frequency domain resource and the second frequency domain resource each includes a carrier, a subcarrier, a subchannel, or the like. The switching from the first frequency domain resource to the second frequency domain resource may be scheduling-based, preconfigured, or predefined. For details, refer to the related descriptions in step 402. Details are not described herein again.

Optionally, one symbol or more continuous symbols adjacent to the first GP in the first time domain resource may not be used to map data of a first service. In other words, the first time domain resource may include two time domain sub-resources (for example, a third time domain sub-resource and a fourth time domain sub-resource) in time domain. The fourth time domain sub-resource adjacent to the first GP is not used to map data (including service data and control signaling) or a signal, and the third time domain sub-resource is used to map the data of the first service. In addition, one symbol or more continuous symbols adjacent to the first GP in the second time domain resource may not be used to map data of a second service. Similarly, the second time domain resource may include two time domain sub-resources (for example, a fifth time domain sub-resource and a sixth time domain sub-resource) in time domain. The fifth time domain sub-resource adjacent to the first GP is not used to map data (including service data and control signaling) or a signal, and the sixth time domain sub-resource is used to map the data of the second service. It can be learned from the foregoing description that, in addition to the first GP, the available duration in which the master node switches from the first frequency domain resource to the second frequency domain resource may further include some time domain sub-resources in the first time domain resource that are adjacent to the first GP and/or some time domain sub-resources in the second time domain resource that are adjacent to the first GP. This further ensures that the master node has sufficient time to perform frequency domain resource switching.

It should be noted that other time domain resource units each may also be divided with reference to the foregoing division manners of the time domain sub-resources in the first time domain resource unit. In a possible implementation, no data or signal is mapped to the time domain sub-resource (for example, the time domain sub-resource in the first time domain resource that is adjacent to the first GP and/or the time domain sub-resource in the second time domain resource that is adjacent to the first GP) related to the frequency domain resource switching. In addition to the time domain sub-resource related to the frequency domain resource switching, there may be a plurality of mapping manners for corresponding time domain sub-resources in another time domain resource unit. First, the corresponding time domain sub-resources may map the data of the first service or the second service. Second, the corresponding time domain sub-resources may map data or a signal other than the data of the first service or the second service. Third, some of the corresponding time domain sub-resources may alternatively do not map data or a signal. Optionally, the corresponding time domain sub-resource in the another time domain resource unit may use any one of the three mapping manners, or use different combinations of the three mapping manners. For example, a corresponding time domain sub-resource in a time domain resource unit A uses the first mapping manner, and a corresponding time domain sub-resource in a time domain resource unit B uses the second mapping manner. Examples are not listed one by one herein.

Optionally, after the master node completes frequency domain resource switching, the master node may first send a target signal to the second slave node on a part of the second time domain resource, and then send the data of the second service to the second slave node on some other part of the second time domain resource. Alternatively, the master node first receives, on a part of the second time domain resource, the target signal sent by the second slave node, and then receives, on some other part of the second time domain resource, the data of the second service that is sent by the second slave node. After the second slave node (the master node) determines a channel based on the received target signal, the second slave node (the master node) transmits the data of the second service, thereby reducing a transmission delay of the data of the second service. For descriptions of the target signal, refer to the related descriptions in step 402. Details are not described herein again.

It should be noted that the foregoing describes, with reference to FIG. 8 and FIG. 9, the embodiment in which the master node performs frequency domain resource switching. In addition, based on the described structure of the time domain resource unit, the master node may further have other selected duration to complete frequency domain resource switching. The following provides further description.

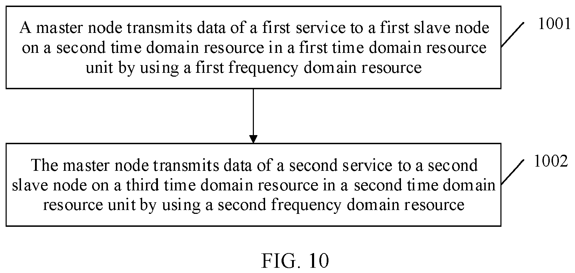

FIG. 10 is a schematic diagram of a fourth data transmission method according to an embodiment of this application. The data transmission method includes the following steps.

1001: A master node transmits data of a first service to a first slave node on a second time domain resource in a first time domain resource unit by using a first frequency domain resource.

A difference between step 1001 and step 801 in the embodiment shown in FIG. 8 lies in that, in this embodiment, the master node transmits the data of the first service to the first slave node by using the second time domain resource. Other aspects are similar to step 801, and details are not described herein again.

1002: The master node transmits data of a second service to a second slave node on a third time domain resource in a second time domain resource unit by using a second frequency domain resource.

In this embodiment, with reference to step 1001, that the master node transmits the data of the second service to the second slave node includes the following two cases. First, if the master node sends the data of the first service to the first slave node, the master node receives the data of the second service that is sent by the second slave node. Second, if the master node receives the data of the first service that is sent by the first slave node, the master node sends the data of the second service to the second slave node. For a description of the second time domain resource unit, refer to related descriptions in step 402. Details are not described herein again.

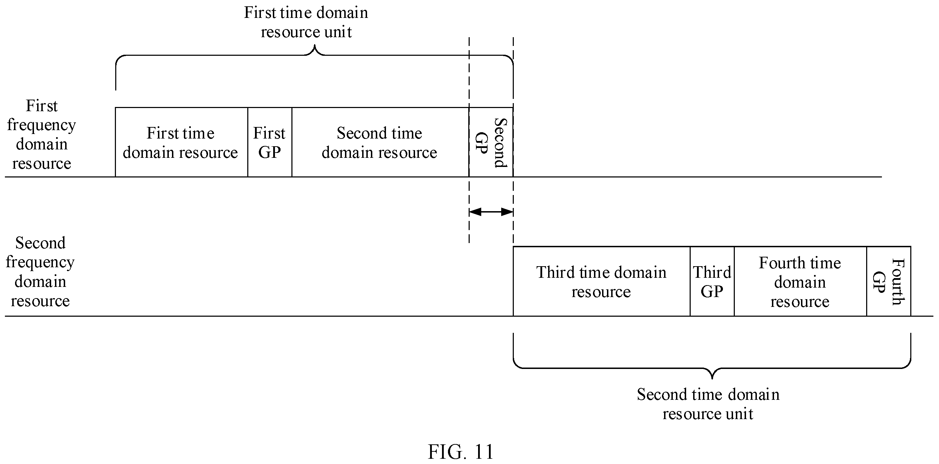

FIG. 11 is a schematic diagram of another embodiment in which a master node performs frequency domain resource switching. As shown in FIG. 11, in time domain, a second time domain resource and a third time domain resource are separated by a second GP. In other words, available duration in which the master node switches from a first frequency domain resource to a second frequency domain resource includes the second GP. It may be understood that the master node performs frequency domain resource switching in the second GP between the second time domain resource and the third time domain resource, and simultaneously completes switching from receiving to sending or from sending to receiving. In addition, a component capability of the master node is stronger than that of a slave node, and can support frequency domain resource switching to be completed in a relatively short time. Therefore, in this embodiment, it can be ensured that the master node has sufficient time to perform frequency domain resource switching, and normal transmission between the master node and the first slave node and normal transmission between the master node and the second slave node are not affected.

A type of the first frequency domain resource and the second frequency domain resource each includes a carrier, a subcarrier, a subchannel, or the like. The switching from the first frequency domain resource to the second frequency domain resource may be scheduling-based, preconfigured, or predefined. For details, refer to the related descriptions in step 402. Details are not described herein again.

Optionally, one symbol or more continuous symbols adjacent to the second GP in the second time domain resource may not be used to map data of a first service. In other words, the second time domain resource may include two time domain sub-resources (for example, a third time domain sub-resource and a fourth time domain sub-resource) in time domain. The fourth time domain sub-resource adjacent to the second GP is not used to map data (including service data and control signaling) or a signal, and the third time domain sub-resource is used to map the data of the first service. In addition, one symbol or more continuous symbols adjacent to the second GP in the third time domain resource may not be used to map data of a second service. Similarly, the third time domain resource may include two time domain sub-resources (for example, a fifth time domain sub-resource and a sixth time domain sub-resource) in time domain. The fifth time domain sub-resource adjacent to the second GP is not used to map data (including service data and control signaling) or a signal, and the sixth time domain sub-resource is used to map the data of the second service. It can be learned from the foregoing description that, in addition to the second GP, the available duration in which the master node switches from the first frequency domain resource to the second frequency domain resource may further include some time domain sub-resources in the second time domain resource that are adjacent to the second GP and/or some time domain sub-resources in the third time domain resource that are adjacent to the second GP. This further ensures that the master node has sufficient time to perform frequency domain resource switching.

It should be noted that other time domain resource units each may also be divided with reference to the foregoing division manners of the time domain sub-resources in the first time domain resource unit. In a possible implementation, no data or signal is mapped to the time domain sub-resource (for example, the time domain sub-resource in the second time domain resource that is adjacent to the second GP and/or the time domain sub-resource in the third time domain resource that is adjacent to the second GP) related to the frequency domain resource switching. In addition to the time domain sub-resource related to the frequency domain resource switching, there may be a plurality of mapping manners for corresponding time domain sub-resources in another time domain resource unit. First, the corresponding time domain sub-resources may map the data of the first service or the second service. Second, the corresponding time domain sub-resources may map data or a signal other than the data of the first service or the second service. Third, some of the corresponding time domain sub-resources may do not map data or a signal. Optionally, the corresponding time domain sub-resource in the another time domain resource unit may use any one of the three mapping manners, or use different combinations of the three mapping manners. For example, a corresponding time domain sub-resource in a time domain resource unit A uses the first mapping manner, and a corresponding time domain sub-resource in a time domain resource unit B uses the second mapping manner. Examples are not listed one by one herein.

Optionally, after the master node completes frequency domain resource switching, the master node first sends a target signal to the second slave node on a part of the third time domain resource, and then sends the data of the second service to the second slave node on some other part of the third time domain resource. Alternatively, the master node first receives, on a part of the third time domain resource, the target signal sent by the second slave node, and then receives, on some other part of the third time domain resource, the data of the second service that is sent by the second slave node. After the second slave node (the master node) determines a channel based on the received target signal, the second slave node (the master node) transmits the data of the second service, thereby reducing a transmission delay of the data of the second service. For descriptions of the target signal, refer to the related descriptions in step 402. Details are not described herein again.

It can be learned from the foregoing four embodiments that, based on the structure of the time domain resource unit provided in this application, in a process of data transmission between the master node and the slave node, it can be ensured that both the master node and the slave node have sufficient time for frequency domain resource switching, and normal data transmission between the master node and the slave node is not affected.

The foregoing describes the methods provided in embodiments of this application in detail. The following describes communications apparatuses provided in embodiments of this application in detail. It should be understood that descriptions of communications apparatus embodiments correspond to the descriptions of the method embodiments. Therefore, for content not described in detail, refer to the method embodiments. For brevity, details are not described herein again.

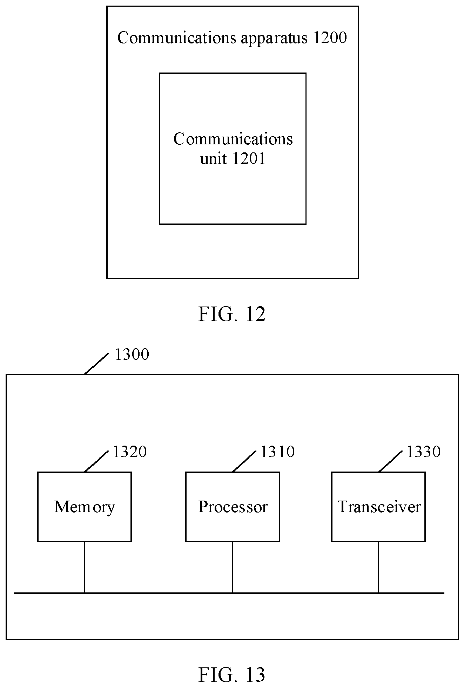

FIG. 12 is a schematic diagram of a structure of a communications apparatus according to an embodiment of this application. The communications apparatus 1200 may include a communications unit 1201. Structures of the slave node and the master node in the foregoing embodiments are similar to a structure of the communications apparatus 1200. For details, refer to related descriptions in FIG. 12. It should be understood that a specific form of the communications apparatus 1200 is not limited in this application. The communications apparatus may be a slave node or a chip or an integrated circuit inside a slave node, or the communications apparatus may be a master node or a chip or an integrated circuit inside a master node.

Further, the communications apparatus 1200 used as a slave node may be described in two embodiments, and the communications apparatus 1200 used as a master node may also be described in two embodiments. The following separately describes four embodiments in detail.

Embodiment 1: The 1^{st} embodiment in which the communications apparatus 1200 is used as a slave node is described in detail as follows:

The communications unit 1201 is configured to transmit first data in a target service to a first communications apparatus on a first time domain resource in a first time domain resource unit by using a first frequency domain resource.

The communications unit 1201 is further configured to transmit second data in the target service to the first communications apparatus on a third time domain resource in a second time domain resource unit by using a second frequency domain resource.

The first time domain resource unit is adjacent to the second time domain resource unit in time domain. The first time domain resource unit sequentially includes, in time domain, the first time domain resource, a first guard period, a second time domain resource, and a second guard period. The second time domain resource unit sequentially includes, in time domain, the third time domain resource, a third guard period, a fourth time domain resource, and a fourth guard period.

Optionally, the first time domain resource and the third time domain resource are used to map information from the first communications apparatus, and the second time domain resource and the fourth time domain resource are used to map information sent to the first communications apparatus.

Alternatively, the first time domain resource and the third time domain resource are used to map information sent to the first communications apparatus, and the second time domain resource and the fourth time domain resource are used to map information from the first communications apparatus.

Optionally, the third time domain resource in the second time domain resource unit includes a first time domain sub-resource and a second time domain sub-resource, and the first time domain sub-resource is located before the second time domain sub-resource in time domain.

The communications unit 1201 is specifically configured to: transmit a target signal to the first communications apparatus on the first time domain sub-resource by using the second frequency domain resource, where the target signal is used for channel estimation; and
transmit the second data in the target service to the first communications apparatus on the second time domain sub-resource by using the second frequency domain resource.

Optionally, the first time domain resource includes a third time domain sub-resource and a fourth time domain sub-resource, the fourth time domain sub-resource is adjacent to the first guard period in time domain, the third time domain sub-resource is used to map the first data, and the fourth time domain sub-resource is not used to map data or a signal; and/or
the third time domain resource includes a fifth time domain sub-resource and a sixth time domain sub-resource, the fifth time domain sub-resource is adjacent to the second guard period in time domain, the sixth time domain sub-resource is used to map the second data, and the fifth time domain resource is not used to map data or a signal.

Optionally, in some possible implementations, the first time domain resource unit and the second time domain resource unit have a same time length. Further, the time length may be predefined or configured. For example, the time length may be 1/48 kHz, approximately equal to 20.833 microseconds.

Optionally, a type of the first frequency domain resource and the second frequency domain resource each includes a carrier, a subcarrier, or a subchannel, and/or a type of the first time domain resource unit and the second time domain resource unit each includes a subframe, a frame, or a slot.

It should be noted that the communications unit 1201 in this embodiment may specifically perform step 401 and step 402 in the embodiment shown in FIG. 4, and details are not described herein again.

Embodiment 2: The 2^{nd} embodiment in which the communications apparatus 1200 is used as a slave node is described in detail as follows:

The communications unit 1201 is configured to transmit first data in a target service to a first communications apparatus on a second time domain resource in a first time domain resource unit by using a first frequency domain resource.

The communications unit 1201 is further configured to transmit second data in the target service to the first communications apparatus on a fourth time domain resource in a second time domain resource unit by using a second frequency domain resource.

The first time domain resource unit is adjacent to the second time domain resource unit in time domain. The first time domain resource unit sequentially includes, in time domain, a first time domain resource, a first guard period, the second time domain resource, and a second guard period. The second time domain resource unit sequentially includes, in time domain, a third time domain resource, a third guard period, the fourth time domain resource, and a fourth guard period.

Optionally, the first time domain resource and the third time domain resource are used to map information from the first communications apparatus, and the second time domain resource and the fourth time domain resource are used to map information sent to the first communications apparatus.

Alternatively, the first time domain resource and the third time domain resource are used to map information sent to the first communications apparatus, and the second time domain resource and the fourth time domain resource are used to map information from the first communications apparatus.

Optionally, the fourth time domain resource in the second time domain resource unit includes a first time domain sub-resource and a second time domain sub-resource, and the first time domain sub-resource is located before the second time domain sub-resource in time domain.

The communications unit 1201 is specifically configured to: transmit a target signal to the first communications apparatus on the first time domain sub-resource by using the second frequency domain resource, where the target signal is used for channel estimation; and
transmit the second data in the target service to the first communications apparatus on the second time domain sub-resource by using the second frequency domain resource.

Optionally, the second time domain resource includes a third time domain sub-resource and a fourth time domain sub-resource, the fourth time domain sub-resource is adjacent to the second guard period in time domain, the third time domain sub-resource is used to map the first data, and the fourth time domain sub-resource is not used to map data or a signal; and/or
the fourth time domain resource includes a fifth time domain sub-resource and a sixth time domain sub-resource, the fifth time domain sub-resource is adjacent to the third guard period in time domain, the sixth time domain sub-resource is used to map the second data, and the fifth time domain resource is not used to map data or a signal.

Optionally, in some possible implementations, the first time domain resource unit and the second time domain resource unit have a same time length. Further, the time length may be predefined or configured. For example, the time length may be 1/48 kHz, approximately equal to 20.833 microseconds.

Optionally, a type of the first frequency domain resource and the second frequency domain resource each includes a carrier, a subcarrier, or a subchannel, and/or a type of the first time domain resource unit and the second time domain resource unit each includes a subframe, a frame, or a slot.

It should be noted that the communications unit 1201 in this embodiment may specifically perform step 601 and step 602 in the embodiment shown in FIG. 6, and details are not described herein again.

Embodiment 3: The 1^{st} embodiment in which the communications apparatus 1200 is used as a master node is described in detail as follows:

A communications unit 1201 is configured to transmit data of a first service to a second communications apparatus on a first time domain resource in a first time domain resource unit by using a first frequency domain resource.

The communications unit 1201 is further configured to transmit data of a second service to a third communications apparatus on a second time domain resource in the first time domain resource unit by using a second frequency domain resource.

The first time domain resource unit sequentially includes, in time domain, the first time domain resource, a first guard period, the second time domain resource, and a second guard period.

Optionally, the first time domain resource is used to map information from the second communications apparatus, and the second time domain resource is used to map information sent to the third communications apparatus.

Alternatively, the first time domain resource is used to map information sent to the second communications apparatus, and the second time domain resource is used to map information from the third communications apparatus.

Optionally, the second time domain resource in the first time domain resource unit includes a first time domain sub-resource and a second time domain sub-resource, and the first time domain sub-resource is located before the second time domain sub-resource in time domain.

The communications unit 1201 is specifically configured to: transmit a target signal to the third communications apparatus on the first time domain sub-resource by using the second frequency domain resource, where the target signal is used for channel estimation; and
transmit the data of the second service to the third communications apparatus on the second time domain sub-resource by using the second frequency domain resource.

Optionally, the first time domain resource includes a third time domain sub-resource and a fourth time domain sub-resource, the fourth time domain sub-resource is adjacent to the first guard period in time domain, the third time domain sub-resource is used to map the data of the first service, and the fourth time domain sub-resource is not used to map data or a signal; and/or
the second time domain resource includes a fifth time domain sub-resource and a sixth time domain sub-resource, the fifth time domain sub-resource is adjacent to the first guard period in time domain, the sixth time domain sub-resource is used to map the data of the second service, and the fifth time domain resource is not used to map data or a signal.

Optionally, a type of the first frequency domain resource and the second frequency domain resource each includes a carrier, a subcarrier, or a subchannel, and/or a type of the first time domain resource unit includes a subframe, a frame, and a slot.

It should be noted that the communications unit 1201 in this embodiment may specifically perform step 801 and step 802 in the embodiment shown in FIG. 8, and details are not described herein again.

Embodiment 4: The 2^{nd} embodiment in which the communications apparatus 1200 is used as a master node is described in detail as follows:

A communications unit 1201 is configured to transmit data of a first service to a second communications apparatus on a second time domain resource in a first time domain resource unit by using a first frequency domain resource.

The communications unit 1201 is further configured to transmit data of a second service to a third communications apparatus on a third time domain resource in a second time domain resource unit by using a second frequency domain resource.

The first time domain resource unit is adjacent to the second time domain resource unit in time domain. The first time domain resource unit sequentially includes, in time domain, a first time domain resource, a first guard period, the second time domain resource, and a second guard period. The second time domain resource unit sequentially includes, in time domain, the third time domain resource, a third guard period, a fourth time domain resource, and a fourth guard period.

Optionally, the second time domain resource is used to map information from the second communications apparatus, and the third time domain resource is used to map information sent to the third communications apparatus.

Alternatively, the second time domain resource is used to map information sent to the second communications apparatus, and the third time domain resource is used to map information from the third communications apparatus.

Optionally, the third time domain resource in the second time domain resource unit includes a first time domain sub-resource and a second time domain sub-resource, and the first time domain sub-resource is located before the second time domain sub-resource in time domain.

The communications unit 1201 is specifically configured to: transmit a target signal to the third communications apparatus on the first time domain sub-resource by using the second frequency domain resource, where the target signal is used for channel estimation; and
transmit the data of the second service to the third communications apparatus on the second time domain sub-resource by using the second frequency domain resource.

Optionally, the second time domain resource includes a third time domain sub-resource and a fourth time domain sub-resource, the fourth time domain sub-resource is adjacent to the second guard period in time domain, the third time domain sub-resource is used to map the data of the first service, and the fourth time domain sub-resource is not used to map data or a signal; and/or
the third time domain resource includes a fifth time domain sub-resource and a sixth time domain sub-resource, the fifth time domain sub-resource is adjacent to the second guard period in time domain, the sixth time domain sub-resource is used to map the data of the second service, and the fifth time domain resource is not used to map data or a signal.

Optionally, in some possible implementations, the first time domain resource unit and the second time domain resource unit have a same time length. Further, the time length may be predefined or configured. For example, the time length may be 1/48 kHz, approximately equal to 20.833 microseconds.

Optionally, a type of the first frequency domain resource and the second frequency domain resource each includes a carrier, a subcarrier, or a subchannel, and/or a type of the first time domain resource unit and the second time domain resource unit each includes a subframe, a frame, or a slot.

It should be noted that the communications unit 1201 in this embodiment may specifically perform step 1001 and step 1002 in the embodiment shown in FIG. 10, and details are not described herein again.

FIG. 13 is a schematic diagram of a structure of another communications apparatus according to an embodiment of this application. As shown in the figure, the communications apparatus 1300 includes: a processor 1310, at least one memory 1320, and a transceiver 1330. The memory 1320 stores a program, and the processor 1310 is configured to execute the program stored in the memory 1320, so that the processor 1310 controls the transceiver 1330 to perform related steps of information transmission in the method embodiments.

It may be understood that the transceiver 1330 in the communications apparatus 1300 may be a communications interface (for example, an input/output interface).

In an implementation, the communications apparatus 1300 is configured to perform actions performed by the slave node in the method embodiments. Specifically, the processor 1310 is configured to execute the program stored in the memory 1320, so that the processor 1310 controls the transceiver 1330 to perform step 401 and step 402. Alternatively, the processor 1310 is configured to execute the program stored in the memory 1320, so that the processor 1310 controls the transceiver 1330 to perform step 601 and step 602.

In another implementation, the communications apparatus 1300 is configured to perform actions performed by the master node in the method embodiments. Specifically, the processor 1310 is configured to execute the program stored in the memory 1320, so that the processor 1310 controls the transceiver 1330 to perform step 801 and step 802. Alternatively, the processor 1310 is configured to execute the program stored in the memory 1320, so that the processor 1310 controls the transceiver 1330 to perform step 1001 and step 1002.

It should be noted that, in a possible implementation, the communications apparatus may alternatively be a chip inside the master node or the slave node. The following provides detailed descriptions.

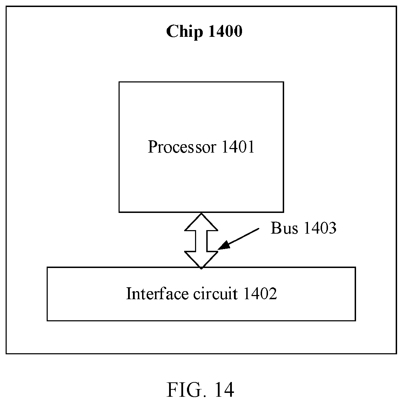

FIG. 14 is a schematic diagram of a structure of a chip according to an embodiment of this application. The chip 1400 includes one or more processors 1401 and an interface circuit 1402. Optionally, the chip 1400 may further include a bus 1403. The processor 1401 may be an integrated circuit chip and has a signal processing capability.

In an implementation process, steps of the methods may be completed by using an integrated logic circuit of hardware in the processor 1401 or instructions in a form of software. The processor 1401 may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor 1401 may implement or perform the methods and steps that are disclosed in embodiments of this application. The general-purpose processor may be a microprocessor, or the processor may be any conventional processor or the like. For a type of the processor 1310 described above, refer to the explanation of the processor 1401.

The interface circuit 1402 may send or receive data, instructions, or information. The processor 1401 may process the data, the instructions, or other information received through the interface circuit 1402, and send, through the interface circuit 1402, information obtained after processing.

Optionally, the chip further includes a memory. The memory may include a read-only memory and a random access memory, and provide operation instructions and data for the processor. A part of the memory may further include a non-volatile random access memory (NVRAM).

Optionally, the memory stores an executable software module or a data structure, and the processor may perform a corresponding operation by invoking operation instructions (the operation instructions may be stored in an operating system) stored in the memory.

Optionally, the chip may be used in the communications apparatus (including the master node and the slave node) in embodiments of this application. Optionally, the interface circuit 1402 may be configured to output an execution result of the processor 1401. For the data transmission method provided in one or more embodiments of this application, refer to the foregoing embodiments. Details are not described herein again.

It should be noted that functions corresponding to each of the processor 1401 and the interface circuit 1402 may be implemented by using a hardware design, may be implemented by using a software design, or may be implemented by combining software and hardware. This is not limited herein.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synclink dynamic random access memory (synchlink DRAM, SLDRAM), and a direct rambus random access memory (direct rambus RAM, DR RAM). It should be noted that the memory of the system and methods described in this specification includes but is not limited to these and any memory of another proper type.

According to the methods provided in embodiments of this application, this application further provides a computer program product. The computer program product includes computer program code. When the computer program code is run on a computer, the computer performs the data transmission method according to one or more of embodiments of this application.

According to the methods provided in embodiments of this application, this application further provides a computer-readable storage medium. The computer-readable storage medium stores program code. When the program code is run on a computer, the computer performs the data transmission method according to one or more of embodiments of this application.

According to the methods provided in embodiments of this application, this application further provides a system, including the foregoing one or more communications apparatuses, for example, one or more master nodes and one or more slave nodes.

According to the methods provided in embodiments of this application, this application further provides a transportation tool or an intelligent device, including the foregoing one or more communications apparatuses, for example, one or more master nodes and one or more slave nodes. Optionally, the transportation tool may be a vehicle, an unmanned transportation tool (for example, an unmanned aerial vehicle or an unmanned transportation vehicle), a robot, or the like.

All or some of the embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state disc (solid state disc, SSD)), or the like.

The network device and the terminal device in the foregoing apparatus embodiments correspond to the network device or the terminal device in the method embodiments. A corresponding module or unit performs a corresponding step. For example, a communications unit (a transceiver) performs a receiving step or a sending step in the method embodiments, and a step other than the sending step and the receiving step may be performed by a processing unit (a processor). For a function of a specific unit, refer to the corresponding method embodiment. There may be one or more processors.

The terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
transmitting first data in a target service to a first communications apparatus on a first time domain resource in a first time domain resource unit by using a first frequency domain resource; and
transmitting second data in the target service to the first communications apparatus on a third time domain resource in a second time domain resource unit by using a second frequency domain resource, wherein
the first time domain resource unit is adjacent to the second time domain resource unit in time domain, the first time domain resource unit sequentially comprises, in time domain, the first time domain resource, a first guard period, a second time domain resource, and a second guard period, and the second time domain resource unit sequentially comprises, in time domain, the third time domain resource, a third guard period, a fourth time domain resource, and a fourth guard period.

2. The data transmission method according to claim 1, wherein the first time domain resource and the third time domain resource are used to map information from the first communications apparatus, and the second time domain resource and the fourth time domain resource are used to map information sent to the first communications apparatus; or
the first time domain resource and the third time domain resource are used to map information sent to the first communications apparatus, and the second time domain resource and the fourth time domain resource are used to map information from the first communications apparatus.

3. The data transmission method according to claim 1 or 2, wherein the third time domain resource in the second time domain resource unit comprises a first time domain sub-resource and a second time domain sub-resource, and the first time domain sub-resource is located before the second time domain sub-resource in time domain; and
the transmitting second data in the target service to the first communications apparatus by using a second frequency domain resource comprises:
transmitting a target signal to the first communications apparatus on the first time domain sub-resource by using the second frequency domain resource, wherein the target signal is used for channel estimation; and
transmitting the second data in the target service to the first communications apparatus on the second time domain sub-resource by using the second frequency domain resource.

4. The data transmission method according to any one of claims 1 to 3, wherein the first time domain resource comprises a third time domain sub-resource and a fourth time domain sub-resource, the fourth time domain sub-resource is adjacent to the first guard period in time domain, the third time domain sub-resource is used to map the first data, and the fourth time domain sub-resource is not used to map data or a signal; and/or
the third time domain resource comprises a fifth time domain sub-resource and a sixth time domain sub-resource, the fifth time domain sub-resource is adjacent to the second guard period in time domain, the sixth time domain sub-resource is used to map the second data, and the fifth time domain resource is not used to map data or a signal.

5. The data transmission method according to any one of claims 1 to 4, wherein the first time domain resource unit and the second time domain resource unit have a same time length.

6. A data transmission method, comprising:
transmitting first data in a target service to a first communications apparatus on a second time domain resource in a first time domain resource unit by using a first frequency domain resource; and
transmitting second data in the target service to the first communications apparatus on a fourth time domain resource in a second time domain resource unit by using a second frequency domain resource, wherein
the first time domain resource unit is adjacent to the second time domain resource unit in time domain, the first time domain resource unit sequentially comprises, in time domain, a first time domain resource, a first guard period, the second time domain resource, and a second guard period, and the second time domain resource unit sequentially comprises, in time domain, a third time domain resource, a third guard period, the fourth time domain resource, and a fourth guard period.

7. The data transmission method according to claim 6, wherein the first time domain resource and the third time domain resource are used to map information from the first communications apparatus, and the second time domain resource and the fourth time domain resource are used to map information sent to the first communications apparatus; or
the first time domain resource and the third time domain resource are used to map information sent to the first communications apparatus, and the second time domain resource and the fourth time domain resource are used to map information from the first communications apparatus.

8. The data transmission method according to claim 6 or 7, wherein the fourth time domain resource in the second time domain resource unit comprises a first time domain sub-resource and a second time domain sub-resource, and the first time domain sub-resource is located before the second time domain sub-resource in time domain; and
the transmitting second data in the target service to the first communications apparatus by using a second frequency domain resource comprises:
transmitting a target signal to the first communications apparatus on the first time domain sub-resource by using the second frequency domain resource, wherein the target signal is used for channel estimation; and
transmitting the second data in the target service to the first communications apparatus on the second time domain sub-resource by using the second frequency domain resource.

9. The data transmission method according to any one of claims 6 to 8, wherein the second time domain resource comprises a third time domain sub-resource and a fourth time domain sub-resource, the fourth time domain sub-resource is adjacent to the second guard period in time domain, the third time domain sub-resource is used to map the first data, and the fourth time domain sub-resource is not used to map data or a signal; and/or
the fourth time domain resource comprises a fifth time domain sub-resource and a sixth time domain sub-resource, the fifth time domain sub-resource is adjacent to the third guard period in time domain, the sixth time domain sub-resource is used to map the second data, and the fifth time domain resource is not used to map data or a signal.

10. The data transmission method according to any one of claims 6 to 9, wherein the first time domain resource unit and the second time domain resource unit have a same time length.

11. A data transmission method, comprising:
transmitting data of a first service to a second communications apparatus on a first time domain resource in a first time domain resource unit by using a first frequency domain resource; and
transmitting data of a second service to a third communications apparatus on a second time domain resource in the first time domain resource unit by using a second frequency domain resource, wherein
the first time domain resource unit sequentially comprises, in time domain, the first time domain resource, a first guard period, the second time domain resource, and a second guard period.

12. The data transmission method according to claim 11, wherein the first time domain resource is used to map information from the second communications apparatus, and the second time domain resource is used to map information sent to the third communications apparatus; or
the first time domain resource is used to map information sent to the second communications apparatus, and the second time domain resource is used to map information from the third communications apparatus.

13. The data transmission method according to claim 11 or 12, wherein the second time domain resource in the first time domain resource unit comprises a first time domain sub-resource and a second time domain sub-resource, and the first time domain sub-resource is located before the second time domain sub-resource in time domain; and
the transmitting data of a second service to a third communications apparatus by using a second frequency domain resource comprises:
transmitting a target signal to the third communications apparatus on the first time domain sub-resource by using the second frequency domain resource, wherein the target signal is used for channel estimation; and
transmitting the data of the second service to the third communications apparatus on the second time domain sub-resource by using the second frequency domain resource.

14. The data transmission method according to any one of claims 11 to 13, wherein the first time domain resource comprises a third time domain sub-resource and a fourth time domain sub-resource, the fourth time domain sub-resource is adjacent to the first guard period in time domain, the third time domain sub-resource is used to map the data of the first service, and the fourth time domain sub-resource is not used to map data or a signal; and/or
the second time domain resource comprises a fifth time domain sub-resource and a sixth time domain sub-resource, the fifth time domain sub-resource is adjacent to the first guard period in time domain, the sixth time domain sub-resource is used to map the data of the second service, and the fifth time domain resource is not used to map data or a signal.

15. A data transmission method, comprising:
transmitting data of a first service to a second communications apparatus on a second time domain resource in a first time domain resource unit by using a first frequency domain resource; and
transmitting data of a second service to a third communications apparatus on a third time domain resource in a second time domain resource unit by using a second frequency domain resource, wherein
the first time domain resource unit is adjacent to the second time domain resource unit in time domain, the first time domain resource unit sequentially comprises, in time domain, a first time domain resource, a first guard period, the second time domain resource, and a second guard period, and the second time domain resource unit sequentially comprises, in time domain, the third time domain resource, a third guard period, a fourth time domain resource, and a fourth guard period.

16. The data transmission method according to claim 15, wherein the second time domain resource is used to map information from the second communications apparatus, and the third time domain resource is used to map information sent to the third communications apparatus; or
the second time domain resource is used to map information sent to the second communications apparatus, and the third time domain resource is used to map information from the third communications apparatus.

17. The data transmission method according to claim 15 or 16, wherein the third time domain resource in the second time domain resource unit comprises a first time domain sub-resource and a second time domain sub-resource, and the first time domain sub-resource is located before the second time domain sub-resource in time domain; and
the transmitting data of a second service to a third communications apparatus by using a second frequency domain resource comprises:
transmitting a target signal to the third communications apparatus on the first time domain sub-resource by using the second frequency domain resource, wherein the target signal is used for channel estimation; and
transmitting the data of the second service to the third communications apparatus on the second time domain sub-resource by using the second frequency domain resource.

18. The data transmission method according to any one of claims 15 to 17, wherein the second time domain resource comprises a third time domain sub-resource and a fourth time domain sub-resource, the fourth time domain sub-resource is adjacent to the second guard period in time domain, the third time domain sub-resource is used to map the data of the first service, and the fourth time domain sub-resource is not used to map data or a signal; and/or
the third time domain resource comprises a fifth time domain sub-resource and a sixth time domain sub-resource, the fifth time domain sub-resource is adjacent to the second guard period in time domain, the sixth time domain sub-resource is used to map the data of the second service, and the fifth time domain resource is not used to map data or a signal.

19. The data transmission method according to any one of claims 15 to 18, wherein the first time domain resource unit and the second time domain resource unit have a same time length.

20. A communications apparatus, comprising:
a communications unit, configured to transmit first data in a target service to a first communications apparatus on a first time domain resource in a first time domain resource unit by using a first frequency domain resource, wherein
the communications unit is further configured to transmit second data in the target service to the first communications apparatus on a third time domain resource in a second time domain resource unit by using a second frequency domain resource, wherein
the first time domain resource unit is adjacent to the second time domain resource unit in time domain, the first time domain resource unit sequentially comprises, in time domain, the first time domain resource, a first guard period, a second time domain resource, and a second guard period, and the second time domain resource unit sequentially comprises, in time domain, the third time domain resource, a third guard period, a fourth time domain resource, and a fourth guard period.

21. The communications apparatus according to claim 20, wherein the first time domain resource and the third time domain resource are used to map information from the first communications apparatus, and the second time domain resource and the fourth time domain resource are used to map information sent to the first communications apparatus; or
the first time domain resource and the third time domain resource are used to map information sent to the first communications apparatus, and the second time domain resource and the fourth time domain resource are used to map information from the first communications apparatus.

22. The communications apparatus according to claim 20 or 21, wherein the third time domain resource in the second time domain resource unit comprises a first time domain sub-resource and a second time domain sub-resource, and the first time domain sub-resource is located before the second time domain sub-resource in time domain; and
the communications unit is specifically configured to: transmit a target signal to the first communications apparatus on the first time domain sub-resource by using the second frequency domain resource, wherein the target signal is used for channel estimation, and
transmit the second data in the target service to the first communications apparatus on the second time domain sub-resource by using the second frequency domain resource.

23. The communications apparatus according to any one of claims 20 to 22, wherein the first time domain resource comprises a third time domain sub-resource and a fourth time domain sub-resource, the fourth time domain sub-resource is adjacent to the first guard period in time domain, the third time domain sub-resource is used to map the first data, and the fourth time domain sub-resource is not used to map data or a signal; and/or
the third time domain resource comprises a fifth time domain sub-resource and a sixth time domain sub-resource, the fifth time domain sub-resource is adjacent to the second guard period in time domain, the sixth time domain sub-resource is used to map the second data, and the fifth time domain resource is not used to map data or a signal.

24. The communications apparatus according to any one of claims 20 to 23, wherein the first time domain resource unit and the second time domain resource unit have a same time length.

25. A communications apparatus, comprising:
a communications unit, configured to transmit first data in a target service to a first communications apparatus on a second time domain resource in a first time domain resource unit by using a first frequency domain resource, wherein
the communications unit is further configured to transmit second data in the target service to the first communications apparatus on a fourth time domain resource in a second time domain resource unit by using a second frequency domain resource, wherein
the first time domain resource unit is adjacent to the second time domain resource unit in time domain, the first time domain resource unit sequentially comprises, in time domain, a first time domain resource, a first guard period, the second time domain resource, and a second guard period, and the second time domain resource unit sequentially comprises, in time domain, a third time domain resource, a third guard period, the fourth time domain resource, and a fourth guard period.

26. The communications apparatus according to claim 25, wherein the first time domain resource and the third time domain resource are used to map information from the first communications apparatus, and the second time domain resource and the fourth time domain resource are used to map information sent to the first communications apparatus; or
the first time domain resource and the third time domain resource are used to map information sent to the first communications apparatus, and the second time domain resource and the fourth time domain resource are used to map information from the first communications apparatus.

27. The communications apparatus according to claim 25 or 26, wherein the fourth time domain resource in the second time domain resource unit comprises a first time domain sub-resource and a second time domain sub-resource, and the first time domain sub-resource is located before the second time domain sub-resource in time domain; and
the communications unit is specifically configured to: transmit a target signal to the first communications apparatus on the first time domain sub-resource by using the second frequency domain resource, wherein the target signal is used for channel estimation, and
transmit the second data in the target service to the first communications apparatus on the second time domain sub-resource by using the second frequency domain resource.

28. The communications apparatus according to any one of claims 25 to 27, wherein the second time domain resource comprises a third time domain sub-resource and a fourth time domain sub-resource, the fourth time domain sub-resource is adjacent to the second guard period in time domain, the third time domain sub-resource is used to map the first data, and the fourth time domain sub-resource is not used to map data or a signal; and/or
the fourth time domain resource comprises a fifth time domain sub-resource and a sixth time domain sub-resource, the fifth time domain sub-resource is adjacent to the third guard period in time domain, the sixth time domain sub-resource is used to map the second data, and the fifth time domain resource is not used to map data or a signal.

29. The communications apparatus according to any one of claims 25 to 28, wherein the first time domain resource unit and the second time domain resource unit have a same time length.

30. A communications apparatus, comprising:
a communications unit, configured to transmit data of a first service to a second communications apparatus on a first time domain resource in a first time domain resource unit by using a first frequency domain resource, wherein
the communications unit is further configured to transmit data of a second service to a third communications apparatus on a second time domain resource in the first time domain resource unit by using a second frequency domain resource, wherein
the first time domain resource unit sequentially comprises, in time domain, the first time domain resource, a first guard period, the second time domain resource, and a second guard period.

31. The communications apparatus according to claim 30, wherein the first time domain resource is used to map information from the second communications apparatus, and the second time domain resource is used to map information sent to the third communications apparatus; or
the first time domain resource is used to map information sent to the second communications apparatus, and the second time domain resource is used to map information from the third communications apparatus.

32. The communications apparatus according to claim 30 or 31, wherein the second time domain resource in the first time domain resource unit comprises a first time domain sub-resource and a second time domain sub-resource, and the first time domain sub-resource is located before the second time domain sub-resource in time domain; and
the communications unit is specifically configured to: transmit a target signal to the third communications apparatus on the first time domain sub-resource by using the second frequency domain resource, wherein the target signal is used for channel estimation, and
transmit the data of the third service to the second communications apparatus on the second time domain sub-resource by using the second frequency domain resource.

33. The communications apparatus according to any one of claims 30 to 32, wherein the first time domain resource comprises a third time domain sub-resource and a fourth time domain sub-resource, the fourth time domain sub-resource is adjacent to the first guard period in time domain, the third time domain sub-resource is used to map the data of the first service, and the fourth time domain sub-resource is not used to map data or a signal; and/or
the second time domain resource comprises a fifth time domain sub-resource and a sixth time domain sub-resource, the fifth time domain sub-resource is adjacent to the first guard period in time domain, the sixth time domain sub-resource is used to map the data of the second service, and the fifth time domain resource is not used to map data or a signal.

34. A communications apparatus, comprising:
a communications unit, configured to transmit data of a first service to a second communications apparatus on a second time domain resource in a first time domain resource unit by using a first frequency domain resource, wherein
the communications unit is further configured to transmit data of a second service to a third communications apparatus on a third time domain resource in a second time domain resource unit by using a second frequency domain resource, wherein
the first time domain resource unit is adjacent to the second time domain resource unit in time domain, the first time domain resource unit sequentially comprises, in time domain, a first time domain resource, a first guard period, the second time domain resource, and a second guard period, and the second time unit sequentially comprises, in time domain, the third time domain resource, a third guard period, a fourth time domain resource, and a fourth guard period.

35. The communications apparatus according to claim 34, wherein the second time domain resource is used to map information from the second communications apparatus, and the third time domain resource is used to map information sent to the third communications apparatus; or
the second time domain resource is used to map information sent to the second communications apparatus, and the third time domain resource is used to map information from the third communications apparatus.

36. The communications apparatus according to claim 34 or 35, wherein the third time domain resource in the second time domain resource unit comprises a first time domain sub-resource and a second time domain sub-resource, and the first time domain sub-resource is located before the second time domain sub-resource in time domain; and
the communications unit is specifically configured to: transmit a target signal to the third communications apparatus on the first time domain sub-resource by using the second frequency domain resource, wherein the target signal is used for channel estimation, and
transmit the data of the second service to the third communications apparatus on the second time domain sub-resource by using the second frequency domain resource.

37. The communications apparatus according to any one of claims 34 to 36, wherein the second time domain resource comprises a third time domain sub-resource and a fourth time domain sub-resource, the fourth time domain sub-resource is adjacent to the second guard period in time domain, the third time domain sub-resource is used to map the data of the first service, and the fourth time domain sub-resource is not used to map data or a signal; and/or
the third time domain resource comprises a fifth time domain sub-resource and a sixth time domain sub-resource, the fifth time domain sub-resource is adjacent to the second guard period in time domain, the sixth time domain sub-resource is used to map the data of the second service, and the fifth time domain resource is not used to map data or a signal.

38. The communications apparatus according to any one of claims 34 to 37, wherein the first time domain resource unit and the second time domain resource unit have a same time length.

39. A communications apparatus, comprising at least one processor and at least one memory, wherein the memory stores instructions, and
the at least one processor is configured to control, by invoking the instructions stored in the at least one memory, the communications apparatus to perform the method according to any one of claims 1 to 19.

40. A chip, wherein the chip comprises at least one processor and an interface circuit, the interface circuit provides an input and/or output of data or instructions for the at least one processor, and when the at least one processor processes the data or the instructions, the method according to any one of claims 1 to 19 is implemented.

41. A computer-readable storage medium, comprising computer instructions, wherein when the computer instructions are run on a computer device, the computer device is enabled to perform the method according to any one of claims 1 to 19.
